# NEUE EUROPÄISCHE PATENTSCHRIFT

(11) **EP 2 567 836 B2**
(45) Veröffentlichungstag und Bekanntmachung des Hinweises auf die Entscheidung über den Einspruch: **21.04.2021**
(45) Hinweis auf die Patenterteilung: 06.04.2016
(21) Anmeldenummer: 12183766.0
(22) Anmeldetag: 10.09.2012
(51) Int. Cl.: B60D 1/54

(54) **Anhängekupplung**
Tow bar
Attelage

(30) Priorität: 12.09.2011 DE 102011053506
(43) Veröffentlichungstag der Anmeldung: 13.03.2013
(73) Patentinhaber: ACPS Automotive GmbH, 71706 Markgröningen (DE)
(72) Erfinder: Gentner, Wolfgang, 71711 Steinheim (DE); Rimmelspacher, Bernhard, 76287 Rheinstetten (DE); Wegner, Bert, 73333 Gingen (DE); Still, Jürgen, 71640 Ludwigsburg (DE); Riehle, Jörg, 71679 Asperg (DE)
(74) Vertreter: Hoeger, Stellrecht & Partner Patentanwälte mbB

(56) Entgegenhaltungen:
- EP-A1- 1 902 870
- EP-A1- 2 149 460
- EP-A1- 2 163 410
- EP-B1- 1 288 026
- EP-B1- 1 504 928
- DE-A1- 19 859 961
- DE-A1- 19 902 355
- DE-A1-102004 004 503
- DE-A1-102009 033 911
- DE-U- 6 936 956
- US-A- 5 277 448
- US-A1- 2010 270 774

## Beschreibung

Die Erfindung betrifft eine Anhängekupplung umfassend eine fest mit einer Fahrzeugkarosserie verbindbare Halteeinheit, eine an der Halteeinheit vorgesehene Schwenklagereinheit mit einer mit der Halteeinheit fest verbundenen Schwenklagerbasis und mit einem relativ zur Schwenklagerbasis um eine Schwenkachse zwischen einer Arbeitsstellung und einer Ruhestellung verschwenkbaren sowie in Richtung der Schwenkachse verschiebbaren Schwenkelement, einen mit einem Ende an dem Schwenkelement gehaltenen Kugelhals, welcher an einem anderen Ende eine Kupplungskugel trägt und welcher durch die Verschwenkbarkeit des Schwenkelements um die Schwenkachse zwischen der Arbeitsstellung und der Ruhestellung verschwenkbar ist.

Derartige Anhängekupplungen sind aus dem Stand der Technik beispielsweise aus der EP 1 902 870 A1 bekannt.

Bei derartigen schwenkbaren Anhängekupplungen besteht grundsätzlich die Notwendigkeit, den Kugelhals mit dem Schwenkelement in der Arbeitsstellung möglichst stabil an der Schwenkachse drehfest zu fixieren und einen möglichst kostengünstigen und raumsparenden Aufbau zu realisieren.

Diese Aufgabe wird bei einer Anhängekupplung der eingangs beschriebenen Art erfindungsgemäß durch die Merkmale des Anspruchs 1 gelöst.

Der Vorteil dieser Lösung ist darin zu sehen, dass durch das Vorsehen des zentralen Aufnahmeträgers eine einfache konstruktive Lösung geschaffen ist, mit welcher das Schwenkelement in der Fixierstellung fixierbar ist, wobei die erfindungsgemäße Lösung mit dem zentralen Aufnahmeträger den Vorteil hat, dass sie einen sehr kleinen Bauraum benötigt.

Erfindungsgemäß ist vorgesehen, dass die Verriegelungsaufnahme mit einer Einzugsfläche versehen ist, auf die der Verriegelungskörper vor Erreichen der Verriegelungsstellung zum Einziehen des Aufnahmeträgers und somit des Schwenkelements in die Fixierstellung einwirken kann, und dass die Einzugsfläche sich so weit erstreckt, dass das Verriegelungselement auf diese in der Lösestellung einwirken kann, und zwar dann, wenn in der Lösestellung eine Beaufschlagung desselben in Richtung der Verriegelungsstellung erfolgt, so dass mit dem Verriegelungselement ein Einziehen des Aufnahmeträgers in die Fixierstellung bereits von der Schwenkstellung ausgehend möglich ist und es auch möglich ist, bereits in der Schwenkstellung eine Einzugskraft auf den Aufnahmeträger wirken zu lassen.

Zur stabilen Verriegelung ist vorzugsweise vorgesehen, dass der zentrale Aufnahmeträger mindestens zwei Verriegelungsaufnahmen aufweist, dass in dem Raum um den zentralen Aufnahmeträger mindestens zwei Verriegelungselemente angeordnet sind und dass der Führungsträger mindestens zwei Führungen für die mindestens zwei Verriegelungselemente aufweist.

Damit besteht die Möglichkeit, den Aufnahmeträger durch bezüglich der Schwenkachse rotationssymmetrisch wirkende oder im Wesentlichen rotationssymmetrisch wirkende Kräfte zu mit den Verriegelungselementen zu beaufschlagen.

Beispielsweise besteht die Möglichkeit bei zwei Verriegelungselementen diese einander gegenüberliegend anzuordnen oder bei drei Verriegelungselementen diese im Winkelabstand von 120° relativ zueinander anzuordnen.

Insbesondere ist es vorteilhaft, wenn die von den Verriegelungselementen auf den Aufnahmeträger wirkenden Kräfte sich im Wesentlichen oder vollständig gegenseitig aufheben, so dass dadurch in einfacher Weise der Aufnahmeträger selbst bei Beaufschlagung durch die Verriegelungselemente zentriert zur Schwenkachse gehalten ist.

Hinsichtlich des Betätigungselements wurden bislang keine näheren Angaben gemacht.

So wäre es beispielsweise denkbar, das Betätigungselement für eines oder für mehrere Verriegelungselemente so anzuordnen, dass dieses in radialer Richtung zur Schwenkachse bewegbar ist oder so anzuordnen, dass dieses in Richtung parallel zur Schwenkachse bewegbar ist.

Besonders vorteilhaft ist es jedoch, insbesondere um einen kleinen Bauraum zu erreichen, wenn das Betätigungselement um die Schwenkachse drehbar ist und mindestens eine Betätigungsflächenfolge aufweist, die einen maximal radial außenliegenden und einen maximal radial innenliegenden Flächenbereich umfasst und dass das mindestens eine Verriegelungselement beim Anliegen an dem radial maximal außenliegenden Flächenbereich in seiner Lösestellung steht und beim Anliegen an dem radial maximal innenliegenden Flächenbereich in seiner Verriegelungsstelluhg steht.

Im Falle von mindestens zwei Verriegelungselementen ist vorzugsweise vorgesehen, dass das Betätigungselement den Aufnahmeträger und die mindestens zwei Verriegelungselemente radial außenliegend umgibt.

Insbesondere sieht eine vorteilhafte Lösung vor, dass das Betätigungselement einen ringförmigen Betätigungsflächenträger aufweist, an welchem die mindestens eine Betätigungsflächenfolge angeordnet ist.

Prinzipiell wäre es denkbar, das Betätigungselement aktiv, beispielsweise mit einem Antrieb zu bewegen.

Um eine manuell betätigbare, jedoch sichere Positionierung des Betätigungselements zu erreichen, ist vorzugsweise vorgesehen, dass das Betätigungselement durch einen Federkraftspeicher ständig in Richtung seiner Verriegelungsstellung beaufschlagt ist. Dies hat insbesondere den Vorteil, dass die Verriegelungseinheit bei Nichtbetätigung selbsttätig von jeder Stellung in die Verriegelungsstellung, insbesondere eine Spannstellung derselben übergeht.

Diese Lösung hat den Vorteil, dass eine Bewegung des Betätigungselements in Richtung der Lösestellung gegen die Wirkung des Federkraftspeichers zu erfolgen hat und somit bei nicht erfolgender Betätigung des Betätigungselements dieses stets selbsttätig in die Verriegelungsstellung übergeht und somit die Verriegelungselemente in die Verriegelungsaufnahmen bewegt, so dass das System selbsttätig stets in einen sicheren, nämlich verriegelten Zustand übergeht, sofern das Schwenkelement die Fixierstellung erreicht.

Um eine weitere Sicherung des Betätigungselements in der Verriegelungsstellung realisieren zu können, ist vorzugsweise vorgesehen, dass das Betätigungselement durch eine Sicherungseinheit in seiner Verriegelungsstellung gegen eine Bewegung in seine Lösestellung festlegbar ist.

Im Zusammenhang mit der bisherigen Erläuterung der einzelnen Ausführungsbeispiele wurde nicht näher darauf eingegangen, wie eine Betätigung des Betätigungselements erfolgen soll.

Beispielsweise wäre es denkbar, dass auf das Betätigungselement unmittelbar einzuwirken, sei es durch einen Antrieb oder sei es durch eine manuelle Betätigungsvorrichtung.

Besonders vorteilhaft ist es jedoch, wenn das Betätigungselement über ein von einer Ausgangsstellung in eine Mitnahmestellung bewegbares Drehmitnahmeelement betätigbar ist.

Ein derartiges Drehmitnahmeelement eröffnet die Möglichkeit, indirekt auf das Betätigungselement einzuwirken und somit beispielsweise sicherzustellen, dass das Betätigungselement die Möglichkeit hat, stets in seine Verriegelungsstellung überzugehen.

Darüber hinaus erlaubt ein Drehmitnahmeelement eine Betätigung der Sicherungseinheit.

So ist vorzugsweise vorgesehen, dass die Sicherungseinheit durch das Drehmitnahmeelement von einer Entsicherungsstellung in eine Sicherungsstellung bewegbar ist.

Beispielsweise ist dies dadurch möglich, dass das Drehmitnahmeelement spätestens bei Betätigung des Betätigungselements zum Bewegen desselben von der Verriegelungsstellung in die Lösestellung einen Übergang der Sicherungseinheit in die Entsicherungsstellung zulässt.

Besonders günstig ist es dabei, wenn das Drehmitnahmeelement bereits vor einer Einwirkung auf das Betätigungselement die Sicherungseinheit in die Entsicherungsstellung überführt, so dass bei Einwirkung auf das Betätigungselement dieses ohne Blockierung durch die Sicherungseinheit bewegbar ist.

Vorzugsweise ist die Sicherungseinheit so ausgebildet, dass sie ein Sicherungselement umfasst, das durch einen Federkraftspeicher in Richtung seiner Entsicherungsstellung beaufschlagt ist, so dass das Drehmitnahmeelement auf das Sicherungselement so einwirkt, dass dieses bei Beaufschlagung durch das Drehmitnahmeelement in die Sicherungsstellung übergeht und bei einer entsprechenden Bewegung des Drehmitnahmeelements die Möglichkeit hat, aufgrund des Federkraftspeichers in die Entsicherungsstellung überzugehen.

Um beim Vorsehen eines Drehmitnahmeelements sicherzustellen, dass das Drehmitnahmeelement sich stets in seine Ausgangsstellung bewegt, in welcher dieses insbesondere die Sicherungseinheit in der Sicherungsstellung hält, ist vorzugsweise vorgesehen, dass das Drehmitnahmeelement durch einen Federkraftspeicher in Richtung einer Ausgangsstellung beaufschlagt ist.

In der Ausgangsstellung erlaubt dabei das Drehmitnahmeelement eine freie Drehbewegung des Betätigungselements in Richtung seiner Verriegelungsstellung, wobei die zugelassene Drehbewegung des Betätigungselements entsprechend der Ausbildung der Betätigungsflächenfolge ein freies Bewegen des Betätigungselements in Richtung einer Verriegelungsstellung und insbesondere in der Verriegelungsstellung in Richtung einer Spannstellung umfasst, in welcher das Betätigungselement das Verriegelungselement mit der jeweiligen Verriegelungsaufnahme und der jeweiligen Führung verspannend beaufschlagt.

Um sicherzustellen, dass die Verriegelungseinheit nicht nur das Schwenkelement in der Fixierstellung sicher verriegelt, sondern auch das Schwenkelement veranlasst, von der Fixierstellung in die Schwenkstellung überzugehen, wenn die Verriegelungseinheit in ihrer Lösestellung steht, ist vorzugsweise vorgesehen, dass die axial wirkende Verriegelungseinheit eine axial in Richtung der Schwenkstellung wirkende Ausschiebeeinheit aufweist.

Eine derartige Ausschiebeeinheit kann in unterschiedlichster Art und Weise ausgebildet sein.

Vorzugsweise umfasst die Ausschiebeeinheit ein in Richtung der Schwenkachse wirkendes Ausschiebeelement, mit welchem das Schwenkelement von der Fixierstellung in die Schwenkstellung verschiebbar ist.

Ein derartiges Ausschiebeelement ist beispielsweise derart realisiert, dass dieses, beispielsweise mittels einer Schrägfläche auf ein mit dem Schwenkelement gekoppeltes Druckaufnahmeelement wirkt.

Insbesondere ist vorgesehen, dass das Ausschiebeelement mit dem Druckaufnahmeelement dann das Schwenkelement von der Fixierstellung in die Schwenkstellung bewegt, wenn das mindestens eine Verriegelungselement seine Lösestellung erreichen kann, das heißt, dass dann insbesondere das Betätigungselement in seiner Lösestellung steht.

Hinsichtlich der Festlegung der Bewegungen des Verriegelungselements wurde erläutert, dass diese durch die Führung des Führungsträgers erfolgen soll.

Bezüglich der Abstützung des Verriegelungselements insbesondere in der Verriegelungsstellung wurden bislang keine näheren Aussagen gemacht.

So sieht eine vorteilhafte Lösung vor, dass sich das Verriegelungselement in der Verriegelungsstellung an der Führung abstützt.und somit unter Abstützung an der Führung in die Verriegelungsaufnahme eindrückbar ist, um somit in der Verriegelungsstellung den Aufnahmeträger relativ zum Führungsträger mittels des Verriegelungselements verspannen zu können, so dass durch das in seine Verriegelungsstellung seitens des Betätigungselements beaufschlagte Verriegelungselement eine Verspannung des Aufnahmeträgers relativ zum Führungsträger erfolgen kann.

Hinsichtlich der Ausbildung der Führungen am Führungsträger wurden bislang keine näheren Angaben gemacht.

Prinzipiell wäre es denkbar, die Führung so auszubilden, dass sie durch eine Bohrung oder einen geschlossenen Kanal in dem Führungsträger realisiert ist.

Eine besonders vorteilhafte und insbesondere hinsichtlich der Herstellung und des Zusammenbaus vereinfachte Lösung sieht vor, dass die mindestens eine Führung durch eine Vertiefung in dem Führungsträger gebildet ist.

Eine derartige Vertiefung ist beispielsweise nutähnlich ausgebildet und weist einander gegenüberliegende Seitenwände sowie einen Vertiefungsgrund auf, die das Verriegelungselement vorzugsweise in der vorgesehenen Bewegungsrichtung führen.

Dabei ist die Vertiefung so ausgebildet, dass sich das Verriegelungselement in seiner in die Verriegelungsaufnahme eingreifenden Verriegelungsstellung an einem Grund der Vertiefung abstützt und somit in der Verriegelungsstellung sich einerseits am Grund der Vertiefung anliegt, andererseits in der Verriegelungsaufnahme anliegt und darüber hinaus noch durch das Betätigungselement in Richtung der Verriegelungsstellung beaufschlagt ist.

Damit besteht die Möglichkeit, den Aufnahmeträger relativ zu dem Führungsträger durch Eindrücken des Verriegelungselements in die Verriegelungsaufnahme bei Abstützung desselben an dem Grund der Vertiefung zu verspannen.

Besonders vorteilhaft ist es für die Herstellung der Vertiefung und dem Zusammenbau der Schwenklagereinheit, wenn die Vertiefung auf einer dem Führungsträger abgewandten Seite offen ist.

Hinsichtlich der Ausbildung des Führungsträgers und der Fixiereinheit und der Verbindung derselben miteinander wurden bislang keine näheren Angaben gemacht.

So sieht eine vorteilhafte Lösung vor, dass der Führungsträger und ein feststehender Formschlusselemententräger der Fixiereinheit miteinander verbunden sind.

Besonders günstig ist es, wenn der Führungsträger und der Formschlusselemententräger ein einstückiges Teil bilden.

Eine für die Fertigung besonders zweckmäßige Lösung sieht vor, dass die Führung auf einer den Formschlusselementen des feststehenden Formschlusselemententrägers gegenüberliegenden Seite angeordnet ist.

Darüber hinaus sieht alternativ oder ergänzend zu den bislang beschriebenen Lösungen eine weitere vorteilhafte Lösung der eingangs genannten Aufgabe vor, dass das Schwenkelementeinen zentralen Schwenklagerkörper aufweist, der in einer diesen radial außen umschließenden Schwenklagerkörperaufnahme der Schwenklagerbasis um die Schwenkachse schwenkbar und in Richtung der Schwenkachse zwischen der Schwenkstellung und der Fixierstellung verschiebbar gelagert ist.

Das Vorsehen eines derartigen zentralen Schwenklagerkörpers zur schwenkbaren Lagerung des Schwenkelements hat ebenfalls den Vorteil, dass damit eine sehr kleine und raumsparende Bauweise der Schwenklagereinheit möglich wird, da der Schwenklagerkörper seinerseits selbst frei von zusätzlichen in diesen eingebauten Elementen realisiert werden kann.

Beispielsweise lässt sich bei einer derartigen Ausbildung der Schwenklagereinheit vorsehen, dass der Schwenklagerkörper einen mindestens eine Verriegelungsaufnahme aufweisenden zentralen Aufnahmeträger der axial wirkenden Verriegelungseinheit trägt, welcher mit dem Schwenklagerkörper in Richtung der Schwenkachse unverschieblich verbunden ist.

In diesem Fall lässt sich die Verriegelungseinheit vorzugsweise so realisieren, dass in einem Raum um den Aufnahmeträger herum mindestens ein Verriegelungselement der axial wirkenden Verriegelungseinheit angeordnet ist, dass in einer Führung eines an der Schwenklagerbasis abgestützten Führungsträger geführt ist und durch einen auf einer dem Aufnahmeträger abgewandten Seite des Verriegelungselements angeordnetes Betätigungselement mit der mindestens einen Verriegelungsaufnahme in Eingriff oder außer Eingriff bringbar ist.

Eine derartige Lösung ist besonders kompakt und erlaubt in einfacher Weise die Integration der Verriegelungseinheit in die Schwenklagereinheit.

Vorzugsweise sind in diesem Fall der Schwenklagerkörper und der Aufnahmeträger fest miteinander verbunden.

Besonders günstig ist es, wenn der Schwenklagerkörper und der Aufnahmeträger ein einstückiges Teil bilden.

Hinsichtlich der Anordnung von Formschlusselementen der Fixiereinheit wurden im Zusammenhang mit der bisherigen Erläuterung dieser Lösung keine näheren Angaben gemacht.

So sieht eine vorteilhafte Lösung vor, dass ein feststehender Formschlusselemententräger der Fixiereinheit radial außenliegend in einem um den Schwenklagerkörper herum verlaufenden Bereich der Schwenklagerbasis angeordnet ist.

Der Vorteil dieser Lösung ist darin zu sehen, dass dadurch eine ausreichend stabile drehfeste Abstützung des Schwenkelements in der Fixierstellung relativ zur Schwenklagerbasis möglich ist.

Vorzugsweise ist dabei ebenfalls vorgesehen, dass ein mit dem Schwenkelement mitschwenkender Formschlusselemententräger fest mit dem Schwenklagerkörper verbunden ist.

Vorzugsweise ist dabei der mitschwenkende Schwenkelemententrägerfest mit einem Schwenklagerkopf verbunden.

Im einfachsten Fall ist der mitschwenkende Formschlusselemententräger einstückig an den Schwenklagerkopf angeformt.

Hinsichtlich der Betätigung der erfindungsgemäßen Anhängekupplung wurden bislang keine näheren Angaben gemacht.

Beispielsweise ist es denkbar, die Verriegelungseinheit manuell zu betätigen, wobei insbesondere eine manuelle Einwirkung auf das Drehmitnahmeelement erfolgt.

Eine andere vorteilhafte Lösung sieht vor, dass die Verriegelungseinheit durch einen Betätigungsmotor betätigbar ist.

Eine derartige Betätigung durch einen Betätigungsmotor erfolgt jedoch nur in dem Sinne, dass ein Überführen der Verriegelungseinheit in die Lösestellung erfolgt und dann mit dem Betätigungsmotor wiederum die Betätigung eingestellt wird, so dass die Verriegelungseinheit selbsttätig wiederum von der Lösestellung in die Verriegelungsstellung, insbesondere in die Spannstellung übergeht.

Hierzu ist die Verriegelungseinheit mit einem separaten Kraftspeicher, insbesondere einem Federkraftspeicher versehen, welcher zum Übergang von der Lösestellung in die Verriegelungsstellung erzeugt und gegen diesen Kraftspeicher wirkt dann auch der Betätigungsmotor beim Übergang von der Verriegelungsstellung in die Lösestellung.

Mit einer derartigen Lösung besteht die Möglichkeit, eine elektrisch betätigbare Anhängekupplung zur Verfügung zu stellen, wobei beispielsweise das Verschwenken des Kugelhalses auch manuell erfolgen kann.

Alternativ oder ergänzend zum motorischen Betätigen der erfindungsgemäßen Anhängekupplung ist vorgesehen, dass das Schwenkelement durch einen Schwenkmotor zwischen der Antriebsstellung und der Ruhestellung verschwenkbar ist, so dass hier kein manuelles Verschwenken mehr erfolgen muss, sondern dieses Verschwenken durch den Schwenkmotor erfolgt, der seinerseits jedoch nur für die Verschwenkbewegung erforderlich ist.

Alternativ oder ergänzend zu der bisher beschriebenen erfindungsgemäßen Lösung sieht eine weitere Lösung der eingangs genannten Aufgabe vor, dass die Fixiereinheit ein mit der Schwenklagerbasis fest verbundenes feststehendes erstes Zahnsegment aufweist, mit welchem ein mit dem Schwenkelement drehfest verbundenes und mit diesem mitschwenkendes erstes Zahnsegment in der Arbeitsstellung durch Verschieben des Schwenkelements von der Schwenkstellung in die Fixierstellung in Eingriff bringbar ist und durch Verschieben von der Fixierstellung in die Schwenkstellung außer Eingriff bringbar ist.

Der Vorteil dieser Lösung ist darin zu sehen, dass mit dieser eine einfach stabile, realisierbare und insbesondere raumsparend bauende Lösung zur Fixierung des Schwenkelements relativ zur Schwenklagerbasis besteht.

Unter einem Zahnsegment im Sinne der erfindungsgemäßen Lösung ist dabei kein um die Schwenkachse umlaufender Zahnkranz zu verstehen, sondern ein Segment eines derartigen Zahnkranzes.

Vorzugsweise erstreckt sich ein derartiges Zahnsegment über einen ein Bogensegment von maximal als 180°, vorzugsweise maximal 120° um die Schwenkachse.

Um auch in der Ruhestellung eine Fixierung des Schwenkelements realisieren zu können, ist vorzugsweise vorgesehen, dass die Fixiereinheit ein mit der Schwenklagerbasis fest oder mit dem Schwenkelement drehfest verbundenes weiteres erstes Zahnsegment aufweist, mit welchem das mit dem Schwenkelement drehfest verbundene und mit diesem mitschwenkende bzw. das mit der Schwenklagerbasis fest verbundene erste Zahnsegment in der Ruhestellung durch Verschieben des Schwenkelements von der Schwenkstellung in die Fixierstellung in Eingriff bringbar ist und durch Verschieben von der Fixierstellung in die Schwenkstellung außer Eingriff bringbar ist.

Der Vorteil dieser Lösung ist darin zu sehen, dass damit auch in der Ruhestellung eine einfache Möglichkeit der Fixierung des Schwenkelements relativ zur Schwenklagerbasis gegeben ist.

Um die Fixierung des Schwenkelements relativ zur Schwenklagerbasis mittels der Fixiereinheit noch zu verbessern, ist vorzugsweise vorgesehen, dass die Fixiereinheit ein mit der Schwenklagerbasis fest verbundenes feststehendes zweites Zahnsegment aufweist, mit welchem ein mit dem Schwenkelement drehfest verbundenes und mit dem Schwenkelement mitschwenkendes zweites Zahnsegment in der Arbeitsstellung durch Verschieben des Schwenkelements von der Schwenkstellung in die Fixierstellung in Eingriff bringbar und durch Verschieben des Schwenkelements von der Fixierstellung in die Schwenkstellung außer Eingriff bringbar ist.

Der Vorteil dieser Lösung ist darin zu sehen, dass auch das zweite Zahnsegment somit zur Fixierung des Schwenkelements relativ zur Schwenklagerbasis beitragen kann.

Vorzugsweise lässt sich die Stabilität der Fixierung durch die ersten Zahnsegmente und die zweiten Zahnsegmente noch verbessern, wenn die ersten Zahnsegmente und die zweiten Zahnsegmente relativ zur Schwenkachse jeweils einander im Wesentlichen gegenüberliegend angeordnet sind, so dass auf beiden Seiten der Schwenkachse eine drehfeste Fixierung des Schwenkelements relativzur Schwenklagerbasis erfolgt.

Unter im Wesentlichen gegenüberliegend ist dabei zu verstehen, dass jeweils eine Mitte des ersten Zahnsegments und des entsprechenden zweiten Zahnsegments um einen Winkelabstand von 150° bis 210° relativ zueinander verdreht sind.

Um auch in der Ruhestellung eine Fixierung des Schwenkelements relativ zur Schwenklagerbasis durch mehrere zusammenwirkende Zahnsegmente zu erreichen, ist vorzugsweise vorgesehen, dass die Fixiereinheit ein mit der Schwenklagerbasis fest oder mit dem Schwenkelement drehfest verbundenes weiteres zweites Zahnsegment aufweist, mit welchem das mit dem Schwenkelement drehfest verbundene und mit dem Schwenkelement mitschwenkende bzw. das mit der Schwenklagerbasis fest verbundene zweite Zahnsegment in der Ruhestellung durch Verschieben des Schwenkelements von der Schwenkstellung in die Fixierstellung in Eingriff bringbar und durch Verschieben des Schwenkelements von der Fixierstellung in die Schwenkstellung außer Eingriff bringbar ist.

Der Vorteil auch dieser Lösung ist darin zu sehen, dass auch somit in der Ruhestellung die Möglichkeit besteht, das Schwenkelement relativ zur Schwenklagerbasis bezüglich der Schwenkachse durch einander im Wesentlichen gegenüberliegende Zahnsegmente zu fixieren.

Im Rahmen der bislang beschriebenen Ausführungsbeispiele wurde dabei vorgesehen, dass die weiteren ersten und zweiten Zahnsegmente feststehende erste und zweite Zahnsegmente sein sollen oder dass anstelle der weiteren feststehenden ersten und zweiten Zahnsegmente weitere mitschwenkbare erste und zweite Zahnsegmente vorgesehen werden können, um in der Ruhestellung eine Fixierung des Schwenkelements relativzur Schwenklagerbasis zu erreichen. In diesem Fall sind dann die weiteren Zahnsegmente nicht fest mit der Schwenklagerbasis verbunden, sondern fest mit dem Schwenkelement verbunden.

Hinsichtlich der Anordnung der ersten Zahnsegmente und der zweiten Zahnsegmente in radialer Richtung relativ zueinander wurden bislang keine näheren Angaben gemacht.

Besonders vorteilhaft ist es, wenn die ersten Zahnsegmente in einem ersten radialen Abstand von der Schwenkachse angeordnet sind und die zweiten Zahnsegmente in einem zweiten, sich vom ersten radialen Abstand unterscheidenden radialen Abstand von der Schwenkachse, so dass die ersten Zahnsegmente und die zweiten Zahnsegmente beim Bewegen des Schwenkelements um die Schwenkachse und in Richtung der Schwenkachse kollisionsfrei zueinander bewegbar sind.

Das heißt, dass die ersten und die zweiten Zahnsegmente nicht wechselseitig miteinander in Eingriff bringbar sind sondern nur erste Zahnsegmente mit ersten Zahnsegmenten in Eingriff bringbar sind und zweite Zahnsegmente mit zweiten Zahnsegmenten in Eingriff bringbar sind.

Hinsichtlich der Anordnung der Zahnsegmente wurden bislang keine näheren Angaben gemacht.

So sieht eine vorteilhafte Lösung vor, dass das mit dem Schwenkelement mitschwenkbare erste Zahnsegment an einem Formschlusselemententräger des Schwenkelements gehalten ist.

Das Vorsehen eines Formschlusselemententrägers erlaubt es in einfacher Weise die Zahnsegmente zu positionieren, wobei der Formschlusselemententräger dann mit dem Schwenkelement in einfache Weise verbindbar ist.

Besonders günstig ist es, wenn das mitschwenkbare erste Zahnsegment einstückig an dem Formschlusselemententräger des Schwenkelements angeformt ist.

Hinsichtlich derfeststehenden ersten Zahnsegmente wurden ebenfalls keine näheren Angaben gemacht.

So sieht eine vorteilhafte Lösung vor, dass das feststehende erste Zahnsegment an einem fest mit der Schwenklagerbasis verbundenen Formschlusselemententräger feststehend angeordnet ist.

Das Vorsehen eines Formschlusselemententrägers an der Schwenklagerbasis ermöglicht es ebenfalls, in einfacher Weise die Zahnsegmente zu positionieren und den Formschlusselemententräger relativ zur Schwenklagerbasis dann zu fixieren.

Besonders vorteilhaft ist es, wenn das feststehende erste Zahnsegment einstückig an den Formschlusselemententräger angeformt ist.

Hinsichtlich des weiteren ersten Zahnsegments ist ebenfalls vorgesehen, dass dieses an dem jeweiligen Formschlusselemententräger fest angeordnet ist.

Vorzugsweise ist vorgesehen, dass das weitere erste Zahnsegment formschlüssig an dem jeweiligen Formschlusselemententräger gehalten ist und somit entsprechend der vorgesehenen Ruhestellung einfach positionierbar ist.

Hinsichtlich des mitschwenkenden zweiten Zahnsegments ist vorzugsweise vorgesehen, dass dieses an dem Formschlusselemententräger des Schwenkelements gehalten ist, in gleicher Weise wie das mitschwenkende erste Zahnsegment.

Vorzugsweise ist vorgesehen, dass das mitschwenkende zweite Zahnsegment einstückig an dem Formschlusselemententräger des Schwenkelements angeformt ist.

Hinsichtlich des feststehenden zweiten Zahnsegments ist vorgesehen, dass das feststehende Zahnsegment an dem fest mit der Schwenklagerbasis verbundenen Formschlusselemententräger feststehend angeordnet ist.

Um eine möglichst feste Verbindung realisieren zu können, ist vorgesehen, dass das feststehende zweite Zahnsegment einstückig an den Formschlusselemententräger angeformt ist.

Bezüglich des weiteren zweiten Zahnsegments ist ebenfalls vorgesehen, dass das weitere zweite Zahnsegment an dem jeweiligen Formschlusselemententrägerfest angeordnet ist, wobei vorzugsweise das weitere zweite Zahnsegment formschlüssig an dem jeweiligen Formschlusselemententräger gehalten ist und damit ebenfalls in einfacher Weise entsprechend der Ruhestellung positionierbar ist.

Weitere Merkmale und Vorteile der Erfindung sind Gegenstand der nachfolgenden Beschreibung sowie der zeichnerischen Darstellung einiger Ausführungsbeispiele.

In der Zeichnung zeigen:
- Fig. 1: eine teilweise in einem Heckbereich aufgeschnittene Seitenansicht eines Kraftfahrzeugs mit einer erfindungsgemäßen Anhängekupplung,
- Fig. 2: eine perspektivische Darstellung einer erfindungsgemäßen Anhängekupplung, umfassend eine Halteeinheit, eine Schwenklagereinheit und einen mit der Schwenklagereinheit schwenkbar mit der Halteeinheit verbundenen Kugelhals;
- Fig. 3: eine vergrößerte Ansicht der erfindungsgemäßen Anhängekupplung in Richtung des Pfeils A in Fig. 2 in einer Arbeitsstellung und
- Fig. 4: eine Ansicht entsprechend Fig. 3 in einer Ruhestellung;
- Fig. 5: eine Draufsicht auf die erfindungsgemäße Anhängekupplung in Richtung des Pfeils B in Fig. 2;
- Fig. 6: einen Schnitt längs Linie 6-6 in Fig. 5 durch die Schwenklagereinheit in ihrer Fixierstellung;
- Fig. 7: einen Schnitt längs Linie 6-6 in Fig. 5 durch die Schwenklagereinheit in ihrer Schwenkstellung;
- Fig. 8: einen Schnitt längs Linie 8-8 in Fig. 7;
- Fig. 9: einen Schnitt längs Linie 9-9 in Fig. 7;
- Fig. 10: einen Schnitt längs Linie 10-10 in Fig. 5 in der Schwenkstellung;
- Fig. 11: einen Schnitt ähnlich Fig. 10 in der Fixierstellung;

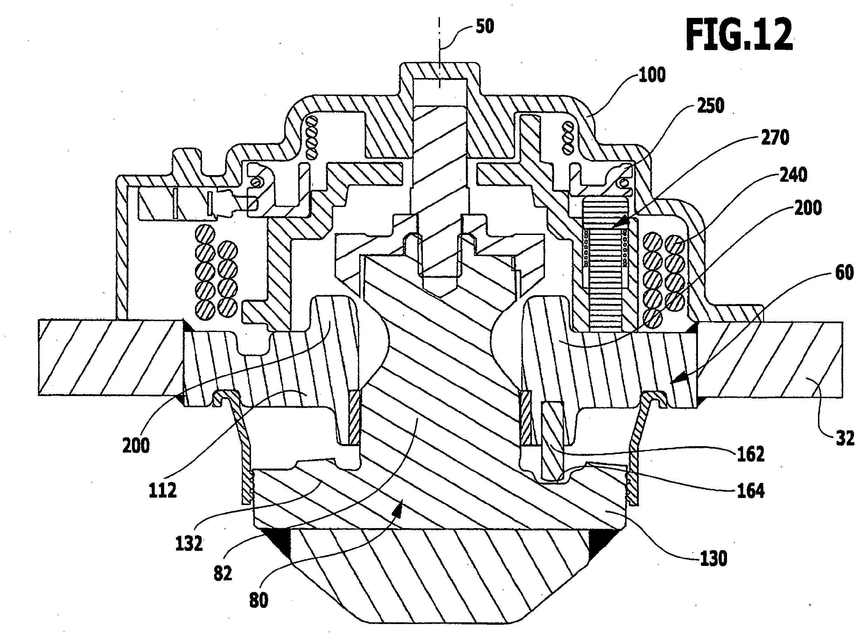

- Fig. 12: einen Schnitt in einer durch die Schwenkachse und durch ein Sicherungselement verlaufenden Schnittebene
- Fig. 13: einen Schnitt längs Linie 13-13 in Fig. 6;
- Fig. 14: einen Schnitt längs Linie 14-14 in Fig. 7;
- Fig. 15: einen Schnitt längs Linie 15-15 in Fig. 6 in einer Ausgangsstellung eines Drehmitnahmeelements und einer Verriegelungsstellung eines Betätigungselements;
- Fig. 16: einen Schnitt ähnlich Fig. 15 in einer Mitnahmestellung des Drehmitnahmeelements und des Betätigungselements bei einem Übergang von der Verriegelungsstellung in eine Lösestellung;

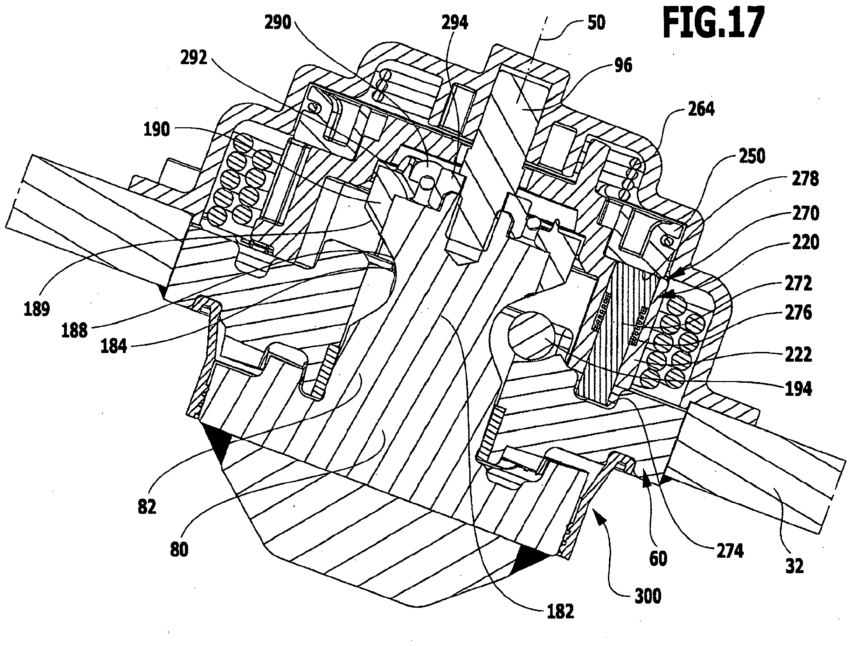

- Fig. 17: einen Schnitt in einer durch die Schwenkachse hindurch verlaufenden und durch ein Sicherungselement mittig hindurch verlaufenden Schnittebene;
- Fig. 18: einen Schnitt entsprechend Fig. 7 mit teilweise weggebrochenen innerem Lagerabschnitt;
- Fig. 19: eine perspektivische Ansicht eines zweiten Ausführungsbeispiels einer erfindungsgemäßen Anhängekupplung und
- Fig. 20: einen Schnitt längs Linie A-A in Fig. 19.

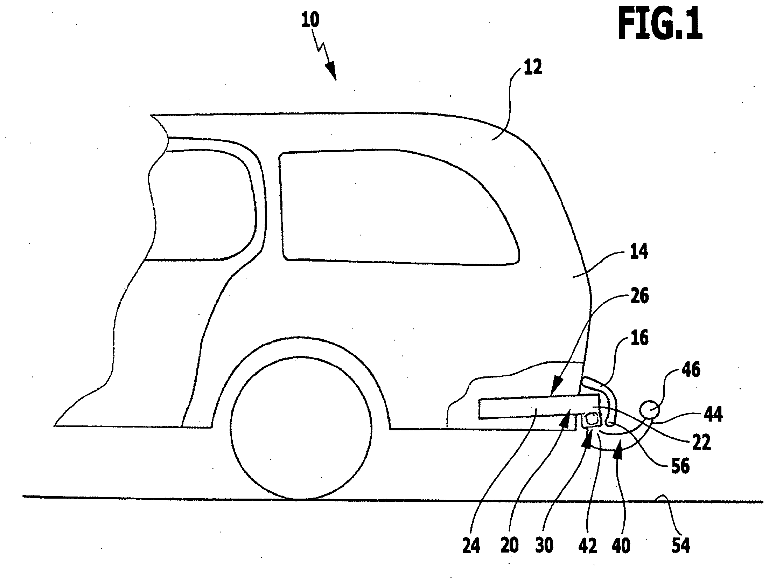

Ein in Fig. 1 dargestelltes, als Ganzes mit 10 bezeichnetes Kraftfahrzeug umfasst eine Fahrzeugkarosserie 12, an welcher an einem Heckbereich 14 eine erfindungsgemäße Anhängekupplung 20 montiert ist, welche einen von einer Stoßfängereinheit 16 abgedeckten und sich quer zu einer Längsrichtung der Fahrzeugkarosserie 12 und quer zum Heckbereich 14 erstreckenden Querträger 22 sowie sich in Längsrichtung der Fahrzeugkarosserie 12 entlang von Karosseriewandabschnitten erstreckende und an diesen fixierte Seitenträger 24 aufweist, die zusammen mit dem Querträger 22 eine Halteeinheit 26 bilden, welche zum Teil durch die Fahrzeugkarosserie 12 und zum Teil durch die Stoßfängereinheit 16 abgedeckt ist.

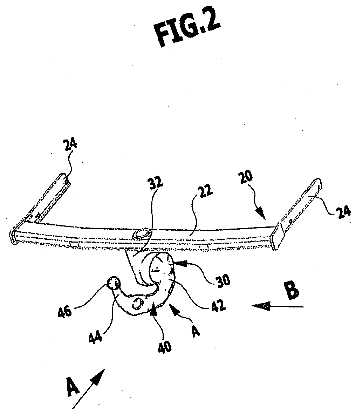

An der Halteeinheit 26 ist eine Halteplatte 32 einer als Ganzes mit 30 bezeichneten Schwenklagereinheit vorgesehen, mit welcher ein als Ganzes mit 40 bezeichneter Kugelhals mit einem ersten Ende 42 verbunden ist, der außerdem an einem zweiten Ende 44 eine als Ganzes mit 46 bezeichnete Kupplungskugel trägt, wie in Fig. 1 und 2 dargestellt.

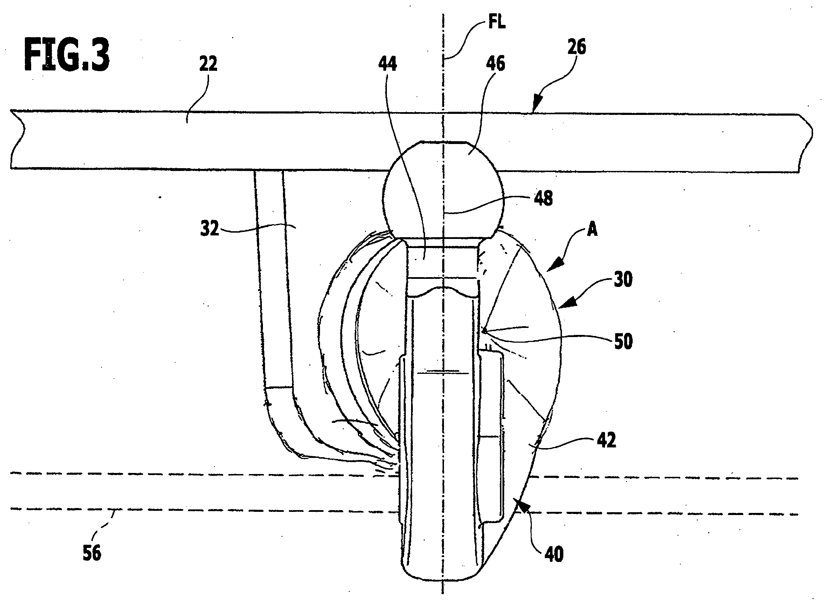

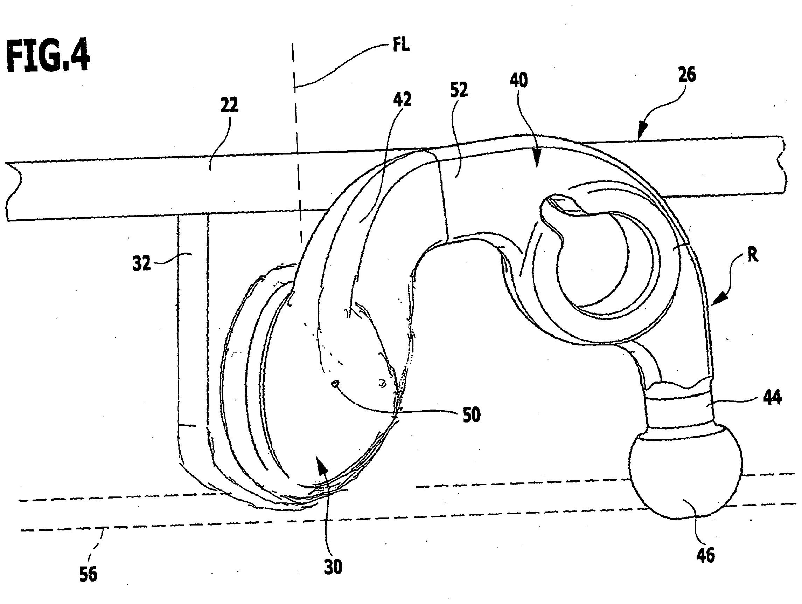

Durch die Schwenklagereinheit 30 besteht die Möglichkeit, den Kugelhals 40, von einer in Fig. 2 und 3 dargestellten Arbeitsstellung A, in welcher eine Kugelmittelachse 48 der Kupplungskugel 46 in einer Fahrzeuglängsmittelebene FL steht, um eine quer, insbesondere schräg, vorzugsweise in einem spitzen Winkel zur Fahrzeuglängsmittelebene FL verlaufende Schwenkachse 50 in eine in Fig. 4 dargestellte Ruhestellung R zu verschwenken, in welcher ein Mittelabschnitt 52 des Kugelhalses sich quer zur Fahrzeuglängsmittelebene FL erstreckt und die Kupplungskugel 46 seitlich der Fahrzeuglängsmittelebene FL liegt (Fig. 4).

Vorzugsweise ist dabei der Kugelhals 40 in der Ruhestellung R in einer durch die Stoßfängereinheit 16 der Fahrzeugkarosserie 12 abgedeckten Stellung seitlich der Fahrzeuglängsmittelebene FL angeordnet und - je nach Ausrichtung der Schwenkachse 50 - liegt der Kugelhals 40 auf einer einer Fahrbahn 54 abgewandten Seite der Kupplungskugel 46 oder der Kugelhals 40 liegt zumindest in einem derartigen Abstand von der Fahrbahn 54, dass er höher liegt als eine Unterkante 56 der Stoßfängereinheit 16 von der Fahrbahn 54.

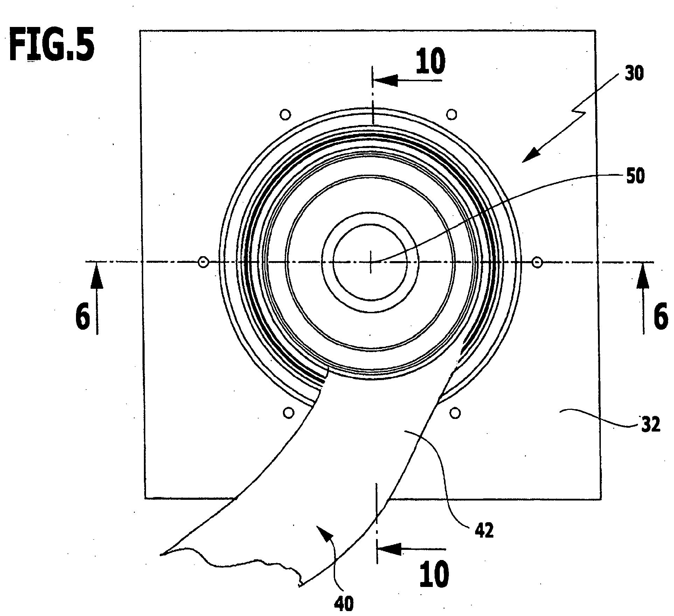

Wie in Fig. 5 bis 7 dargestellt, ist die als Ganzes mit 30 bezeichnete Schwenklagereinheit beispielsweise an der Halteplatte 32 der Halteeinheit 26 so angeordnet, dass die Schwenkachse 50 senkrecht zur Halteplatte 32 verläuft, wobei beispielsweise die erfindungsgemäße Schwenklagereinheit 30 sich beiderseits der Halteplatte 32 erstreckt.

Es ist aber auch möglich, die Schwenklagereinheit direkt mit der Halteeinheit 26 zu verbinden.

Die erfindungsgemäße Schwenklagereinheit 30 umfasst eine Schwenklagerbasis 60, welche beispielsweise in eine Öffnung 62 der Halteplatte 32 eingesetzt und mit der Halteplatte 32 durch Fügen verbunden ist und welche einen zentralen Durchlass 64 bildet, der zumindest in einem Teilabschnitt von einer als Hülse ausgebildeten Schwenklagerkörperaufnahme 66 umschlossen ist.

Vorzugsweise liegt die als Hülse ausgebildete Schwenklagerkörperaufnahme 66 in einer die Schwenklagerkörperaufnahme 66 aufnehmenden in die Schwenklagerbasis 60 eingeformten Vertiefung 68 und grenzt an eine Frontseite 70 der Schwenklagerbasis 60 an.

Relativ zu der Schwenklagerbasis 60 ist ein Schwenkelement 80 um die Schwenkachse 50 verschwenkbar, welches einen Schwenklagerkörper 82 aufweist, der in den Durchlass 64 eingreift und den Durchlass 64 der Schwenklagerbasis 60 durchgreift.

Der Schwenklagerkörper 82 weist im Bereich eines äußeren Endes 84 einen äußeren Lagerabschnitt 86 auf, welcher zylindrische äußere Führungsflächen 88 trägt, die mit zylindrischen Führungsflächen 92 der Schwenklagerkörperaufnahme 66 zusammenwirken, so dass die zylindrischen Führungsflächen 88 und 92 koaxial zur Schwenkachse 50 angeordnet sind und eine äußere Schwenklagerung für den Schwenklagerkörper 82 bilden.

Der Schwenklagerkörper 82 erstreckt sich von dem äußeren Ende 84 ausgehend durch den Durchlass 64 hindurch und bildet an einem inneren Ende 94 einen in Form eines Zapfens ausgebildeten inneren Lagerabschnitt 96, welcher zylindrische innere Führungsflächen 98 trägt, die mit zylindrischen Führungsflächen 102 ebenfalls eine koaxial um die Schwenkachse 50 drehbare innere Schwenklagerung bilden, wobei die Führungsflächen 102 an einem Gehäusekörper 100 angeordnet sind, der fest mit der Halteplatte 30 und somit auch fest mit der Schwenklagerbasis 60 verbunden ist.

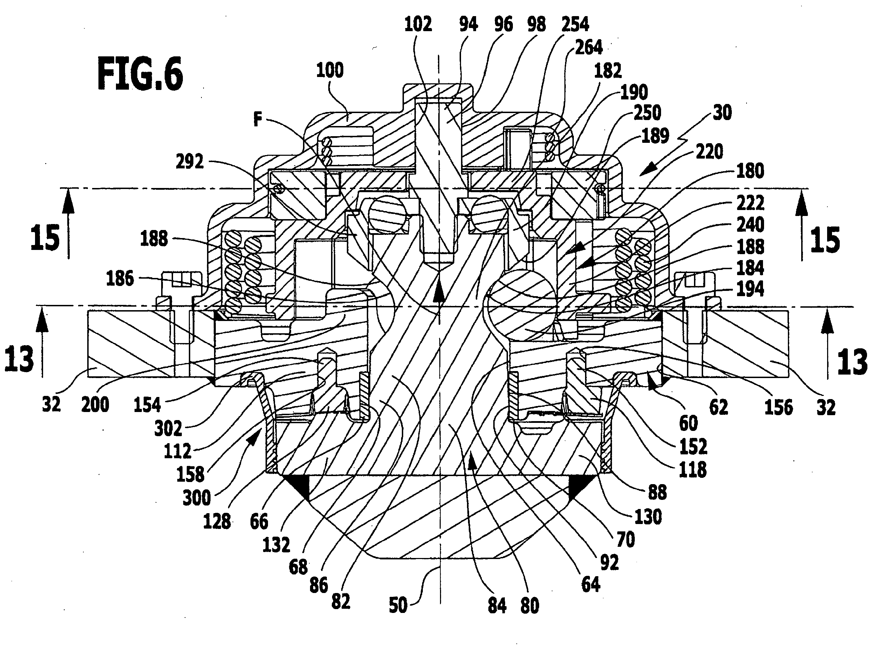

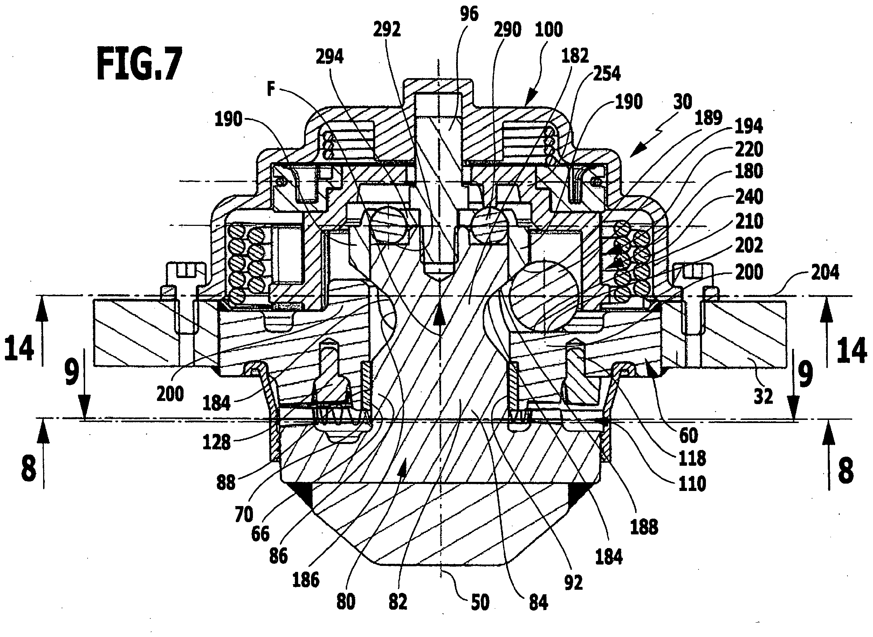

Wie in Fig. 6 und 7 dargestellt, ist das Schwenkelement 80 von einer in Fig. 6 dargestellten Fixierstellung in Richtung der Schwenkachse in eine in Fig. 7 dargestellte Lösestellung verschiebbar, wobei in der Lösestellung das Schwenkelement 80 derart in Richtung der Schwenkachse 50 verschoben ist, dass das äußere Ende 84 des Schwenklagerkörpers 82 zumindest teilweise über die Frontseite 70 der Schwenklagerbasis 60 übersteht, das heißt dass der Schwenklagerkörper 82 insgesamt in Richtung der Frontseite 70 verschoben ist.

Der Schwenklagerkörper 82 ist aber auch in der Schwenkstellung sowohl mit dem inneren Lagerabschnitt 96, umfassend die innere Führungsfläche 98, in der Führungsfläche 102 koaxial zur Schwenkachse 50 geführt als auch mit dem äußeren Lagerabschnitt 86, umfassend die äußere Führungsfläche 88, in der Führungsfläche 92 der Schwenklagerkörperaufnahme 66, koaxial zur Schwenkachse 50 geführt.

Damit lässt die erfindungsgemäße Schwenklagereinheit 30 sowohl ein Verschwenken des Schwenkelements 80 als auch ein Verschieben des Schwenkelements 80 in Richtung der Schwenkachse 50 zu, wobei sowohl in der Fixierstellung als auch in der Schwenkstellung eine um die Schwenkachse 50 drehbare Führung des Schwenklagerkörpers 82 erfolgt.

Vorzugsweise weist die äußere Führungsfläche 88 einen größeren Durchmesser auf als die innere Führungsfläche 98 und ist in der entsprechenden Führungsfläche 92 mit größerem Durchmesser geführt als die innere Führungsfläche 98 in der Führungsfläche 102, so dass die durch die äußere Führungsfläche 88 und die Führungsfläche 92 gebildete äußere Schwenklagerung in der Lage ist, größere Kräfte aufzunehmen als das durch die innere Führungsfläche 98 und die Führungsfläche 102 gebildete innere Schwenklagerung, wobei insbesondere die innere Schwenklagerung primär eine Führung gegen ein Verkanten der äußeren Führungsfläche 88 in der Führungsfläche 92 der äußeren Schwenklagerung darstellt.

Zum drehfesten Festlegen des Schwenkelements 80 relativ zur Schwenklagerbasis 60 ist eine als Ganzes mit 110 bezeichnete Fixiereinheit vorgesehen.

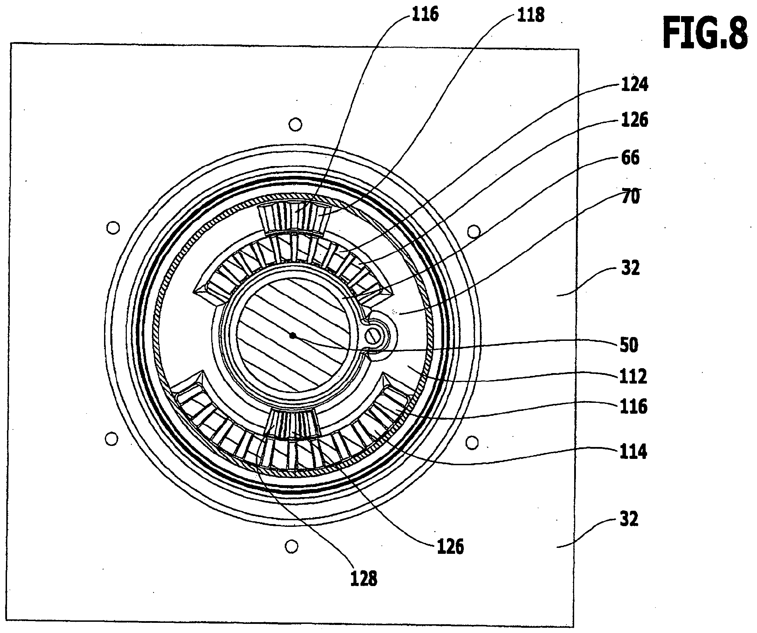

Diese Fixiereinheit 110 umfasst, wie in Fig. 6 und 8 dargestellt, einen radial außerhalb der Schwenklagerkörperaufnahme 66 angeordneten und die Frontseite 70 der Schwenklagerbasis 60 bildenden Formschlusselemententräger 112, welcher als Formschlusselement ein radial außenliegendes erstes Zahnsegment 114 mit ersten Zähnen 116 aufweist, die sich über der Frontseite 70 erheben, wobei das erste Zahnsegment 114 mit einer Vielzahl der ersten Zähne 116 versehen ist, die sich beispielsweise über ein Bogensegment von mehr als 90°, beispielsweise ein Bogensegment von bis zu 120° um die Schwenkachse 50 erstrecken.

Ferner ist an dem Formschlusselemententräger 112 als Formschlusselement ein weiteres erstes Zahnsegment 118 vorgesehen, das ebenfalls erste Zähne 116 aufweist, allerdings nur wenige erste Zähne, beispielsweise drei derartige erste Zähne 116, so dass sich das weitere erste Zahnsegment lediglich über einen Bogenabschnitt erstreckt, der wesentlich kleiner ist als der Bogenabschnitt des ersten Zahnsegments.

Die beiden ersten Zahnsegmente 114 und 118 verlaufen in demselben radialen Abstand um die Schwenkachse 50.

Darüber hinaus ist beispielsweise dem ersten Zahnsegment 114 gegenüberliegend an dem Formschlusselemententräger ein radial innenliegendes zweites Zahnsegment 124 vorgesehen, welches beispielsweise zwischen dem radial außenliegenden weiteren ersten Zahnsegment 118 und der Schwenklagerkörperaufnahme 66 an der Frontseite 70 angeordnet ist.

Auch dieses zweite Zahnsegment 124 weist eine Vielzahl von zweiten Zähnen 126 auf und erstreckt sich über einen Bogenabschnitt von mehr als 90°, vorzugsweise über einen Bogenabschnitt, welcher in seiner Ausdehnung dem des ersten Zahnsegments 114 ungefähr entspricht.

Dem zweiten Zahnsegment 124 gegenüberliegend ist vorzugsweise zwischen dem ersten Zahnsegment 114 und der Schwenklagerkörperaufnahme 66 an dem Formschlusselemententräger 112 ein weiteres zweites Zahnsegment 128 vorgesehen, welches ebenfalls zweite Zähne 126 aufweist, sich allerdings über einen deutlich geringeren Bogenabschnitt erstreckt als das zweite Zahnsegment 126, beispielsweise drei zweite Zähne 126 umfasst.

Die beiden zweiten Zahnsegmente 114, 118 verlaufen in demselben radialen Abstand um die Schwenkachse 50, der jedoch kleiner ist als der radiale Abstand der ersten Zahnsegmente 114, 118 von der Schwenkachse 50.

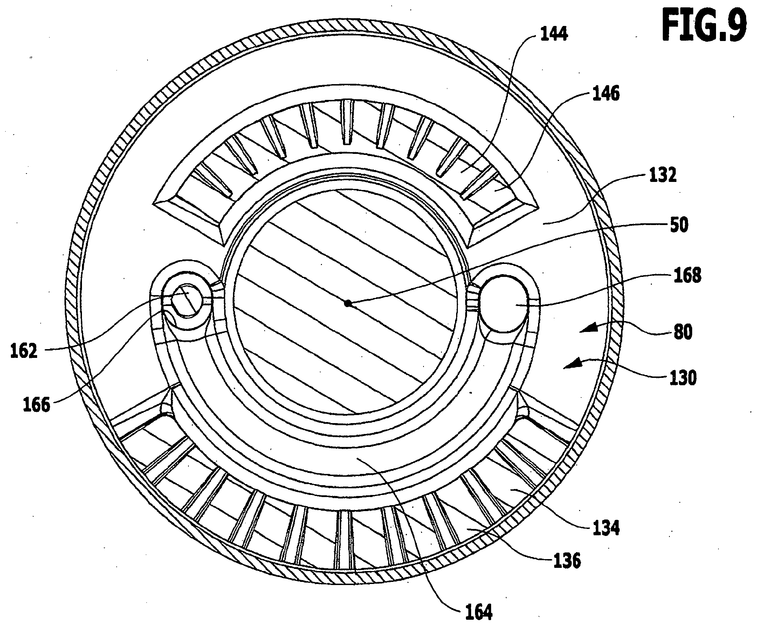

Die Fixiereinheit 110 umfasst zusätzlich zu dem stationären Formschlusselemententräger 112 mit den ersten Zahnsegmenten 114 und 118 sowie den zweiten Zahnsegmenten 124 und 128 einen in Fig. 9 dargestellten mit dem Schwenkelement 80 mitbewegbaren Formschlusselemententräger 132, welcher an einem über den Schwenklagerkörper 82 radial überstehenden und die Frontseite 70 der Schwenklagerbasis 60 übergreifenden Schwenklagerkörperkopf 130 angeordnet ist. Der Formschlusselemententräger 132 weist seinerseits ein radial außenliegendes erstes Zahnsegment 134 mit ersten Zähnen 136 auf, sowie ein radial innenliegendes zweites Zahnsegment 144 mit zweiten Zähnen 146, wobei das erste Zahnsegment 134 und das zweite Zahnsegment 144 bezogen auf die Schwenkachse 50 einander gegenüberliegend angeordnet sind und wobei der radiale Abstand des ersten Zahnsegments 134 und der radiale Abstand des zweiten Zahnsegments 144 von der Schwenkachse 50 den radialen Abständen der entsprechenden Zahnsegmente 114, 118 bzw. 124, 128 des Formschlusselemententrägers 112 entsprechen.

Vorzugsweise sind bei dem bewegbaren Formschlusselemententräger 132 das erste Zahnsegment 134 und das zweite Zahnsegment 144 einstückig an den bewegbaren Formschlusselemententräger 132 angeformt und der bewegbare Formschlusselemententräger 132 ist einstückig an den Schwenklagerkörperkopf 130 angeformt, so dass letztlich die Zahnsegmente 134 und 144 einstückig mit dem Schwenklagerkörper 82 verbunden sind.

Bei der erfindungsgemäßen Lösung sind nun das erste Zahnsegment 114 und das zweite Zahnsegment 124 am stationären Formschlusselemententräger 112 sowie die Zahnsegmente 134 und 144 am bewegbaren Formschlusselemententräger 132 relativ zueinander und relativ zu den Schwehkstellungen des Schwenkelements 80 so angeordnet, dass diese in der Arbeitsstellung A des Kugelhalses 40 beim Bewegen des Schwenkelements 80 von der Schwenkstellung, dargestellt in Fig. 7, in die Fixierstellung, dargestellt in Fig. 6, im Wesentlichen vollständig miteinander in Eingriff bringbar sind, das heißt, dass die ersten Zahnsegmente 114 und 134 sowie die zweiten Zahnsegmente 124 und 144 im Wesentlichen vollständig miteinander, das heißt im Wesentlichen mit allen Zähnen, in Eingriff stehen.

Bewegt man dagegen das Schwenkelement 80 in der Arbeitsstellung A von der Fixierstellung in die Schwenkstellung, so kommen die ersten Zahnsegmente 114 und 134 sowie die zweiten Zahnsegmente 124 und 144 außer Eingriff und das Schwenkelement 80 mit dem Formschlusselemententräger 132 ist relativ zum stationären Formschlusselemententräger 112 und somit auch relativ zur Schwenklagerbasis 60 frei um die Schwenkachse 50 verdrehbar, und zwar bis zum Erreichen der Ruhestellung R, in welcher ein Bewegen des Schwenkelements 80 mit dem bewegbaren Formschlusselemententräger 132 von der Schwenkstellung in die Fixierstellung dazu führt, dass das erste Zahnsegment 134 des bewegbaren Formschlusselemententrägers 132 mit dem weiteren ersten Zahnsegment 118 des Formschlusselemententrägers 112 in Eingriff kommt und das zweite Zahnsegment 144 des bewegbaren Formschlusselemententrägers 132 mit dem weiteren zweiten Zahnsegment 128 des Formschlusselemententrägers 112 in Eingriff kommt, ohne dass Kollisionen mit dem ersten Zahnsegment 114 und dem zweiten Zahnsegment 124 auftreten, um in der Ruhestellung R ebenfalls den Kugelhals 40 relativ zur Halteeinheit 26 und drehfest zur Schwenkachse 50 zu fixieren. Da jedoch in der Ruhestellung R keine großen Belastungen auftreten und keine großen Momente auf den Kugelhals 40 wirken, sind in der Ruhestellung R die weiteren Zahnsegmente 118 und 128 mit wenigen ersten Zähnen 116 und zweiten Zähnen 126 ausreichend, um die Drehmomente um die Schwenkachse 50 aufzunehmen.

Da bei der erfindungsgemäßen Anhängekupplung 20 die Arbeitsstellung A stets feststeht, gegebenenfalls jedoch abhängig von verschiedenen Fahrzeugtypen der Schwenkwinkel zwischen der Arbeitsstellung A und der Ruhestellung R variieren kann und somit auch der Winkelabstand zwischen der Arbeitsstellung A und der Ruhestellung R variieren kann, ist bei der erfindungsgemäßen Lösung vorzugsweise vorgesehen, dass das weitere erste Zahnsegment 128 und das weitere zweite Zahnsegment 118 flexibel mit dem stationären Formschlusselemententräger 112 verbindbar sind. Wie in Fig. 6 beispielhaft dargestellt, sind das weitere erste Zahnsegment 118 und das weitere zweite Zahnsegment 128 mit Haltezapfen 152 und 154 versehen, die in Aufnahmebohrungen 156 und 158 im stationären Formschlusselemententräger 112 eingreifen und dadurch formschlüssig an diesem fixierbar sind.

Beispielsweise werden die Haltezapfen 152 und 154 in den Aufnahmebohrungen 156 und 158 noch stoffschlüssig fixiert.

Je nach Positionierung der Aufnahmebohrungen 156 und 158 relativ zu dem ersten Zahnsegment 114 und dem zweiten Zahnsegment 124 lässt sich somit auch flexibel die Position des weiteren ersten Zahnsegments 118 und des weiteren zweiten Zahnsegments 128 entsprechend dem Winkelabstand zwischen der Arbeitsstellung A und der Ruhestellung R typvariabel festlegen.

Bei dem in den Fig. 7 bis 9 dargestellten Ausführungsbeispiel stellen die Schwenklagerbasis 60 mit dem stationären Formschlusselemententräger 112 und dem ersten Zahnsegment 114 sowie dem zweiten Zahnsegment 124 ein einstückiges Teil dar, welches beispielsweise aus Kostengründen als Gussteil hergestellt ist.

Ferner stellen bei dem in den Fig. 6 bis 9 dargestellten Ausführungsbeispiel der Schwenklagerkörper 82 mit dem Schwenklagerkörperkopf 130 und dem bewegbaren Formschlusselemententräger 132 mit dem ersten Zahnsegment 134 und dem zweiten Zahnsegment 144 ebenfalls ein einstückiges, vorzugsweise aus Guss herstellbares Teil dar.

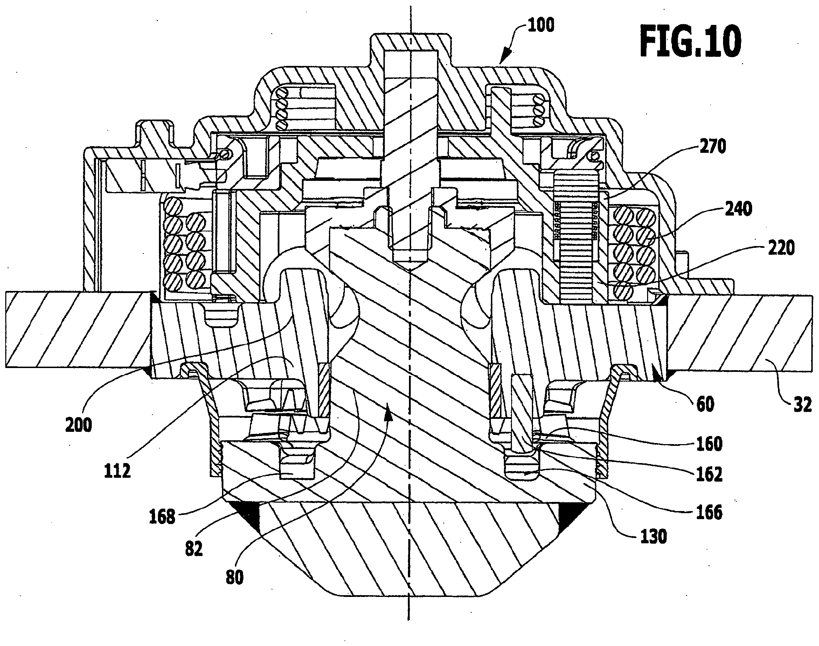

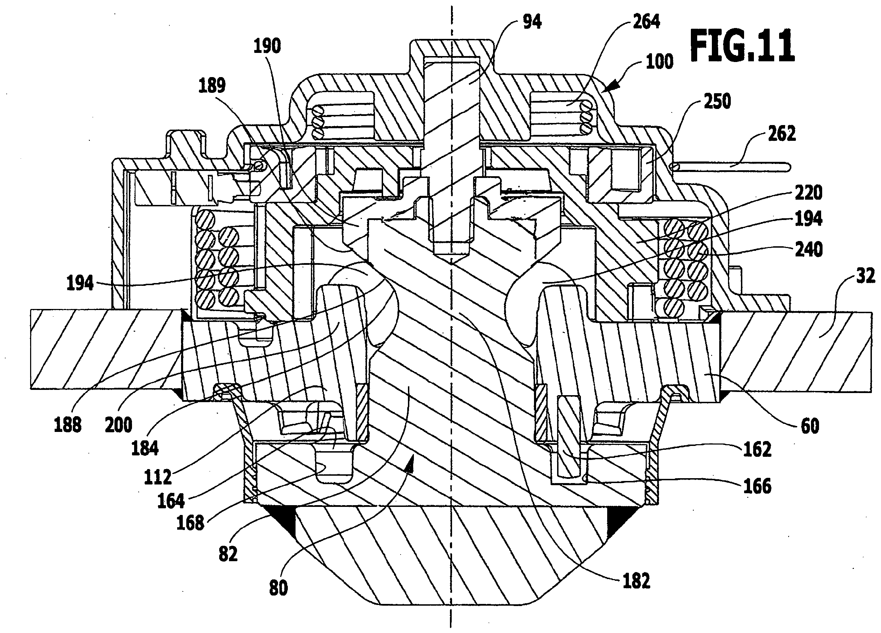

Um zu verhindern, dass beim Schwenken des Schwenkelements 80 relativ zur Schwenklagerbasis 60 um die Schwenkachse 50 zwischen der Arbeitsstellung A und der Ruhestellung R die Zahnsegmente 114 und 118 mit dem Zahnsegment 134 und die Zahnsegmente 124 und 128 mit dem Zahnsegment 144 in den Drehstellungen zwischen der Arbeitsstellung A und der Ruhestellung R in Eingriff kommen ist, eine Fixierblockiereinheit 160 vorgesehen, welche wie in Fig. 9 und 10 dargestellt, einen am stationären Formschlusselemententräger 112 angeordneten und über die Frontseite 70 und die Zahnsegmente 114, 118 sowie 124 und 128 überstehenden Bahnfolger 162 umfasst, welcher mit einer Führungsbahn 164 im bewegbaren Formschlusselemententräger 132 zusammenwirkt, die jeweils in der Arbeitsstellung A und der Ruhestellung R in eine Vertiefung 166 und 168 übergeht, in welche der Bahnfolger 162 dann eintauchen kann, wenn die Arbeitsstellung A und Ruhestellung R erreicht werden, während der Bahnfolger 162 dann, wenn er an der Führungsbahn 164 zwischen den Vertiefungen 166 und 168 entlanggleitet, ein in Eingriffkommen der Zahnsegmente 114 und 118 sowie 124 und 128 mit den Zahnsegmenten 134 und 144 verhindert, wie in Fig. 11 dargestellt.

Um das Schwenkelement 80 und insbesondere auch den stationären Formschlusselemententräger 112 mit dem bewegbaren Formschlusselemententräger 132 in der Fixierstellung in Eingriff zu halten, ist eine als Ganzes mit 180 bezeichnete axial wirkende Verriegelungseinheit 180 vorgesehen, die in den Fig. 6 und 7 sowie 13 und 14 dargestellt ist.

Die axial wirkende Verriegelungseinheit 180 umfasst dabei einen mit dem Schwenkelement 80, vorzugsweise dem Schwenklagerkörper 82 in axialer Richtung zur Schwenkachse 50 mitbewegbaren zentralen Aufnahmeträger 182, welcher vorzugsweise bei dem dargestellten Ausführungsbeispiel einstückig an den Schwenklagerkörper 82 angeformt ist und vorzugsweise mehrere Verriegelungsaufnahmen 184 aufweist, die bei diesem Ausführungsbeispiel beispielsweise durch eine umlaufende Vertiefung 186 im Schwenklagerkörper 82 gebildet ist, welche zwischen dem äußeren Lagerabschnitt 86 und dem inneren Lagerabschnitt 96 liegt, es können jedoch auch einzelne Verriegelungsaufnahmen 184 in dem zentralen Aufnahmeträger vorgesehen werden.

Jede Verriegelungsaufnahme 184 weist ihrerseits eine schräg, vorzugsweise konisch, zur Schwenkachse 50 und mit zunehmender radialer Erstreckung von der Schwenkachse 50 weg verlaufende Verriegelungsfläche 188 auf, an die sich eine mit derselben oder einer variierenden Neigung zur Schwenkachse 50 verlaufende Einzugsfläche 189 anschließt, die sich radial über den Lagerabschnitt 86 hinaus erstreckt.

Die Einzugsfläche 189 ist dabei zumindest zum Teil oder insgesamt beispielsweise an einem auf den Schwenklagerkörper 82 aufgesetzten und radial über den Schwenklagerkörper überstehenden Ringkörper 190 angeordnet.

Es wäre aber auch möglich, den Aufnahmeträger 182 so auszubilden, dass dieser die Einzugsfläche 189 in ihrer gesamten radialen Ausdehnung aufweist.

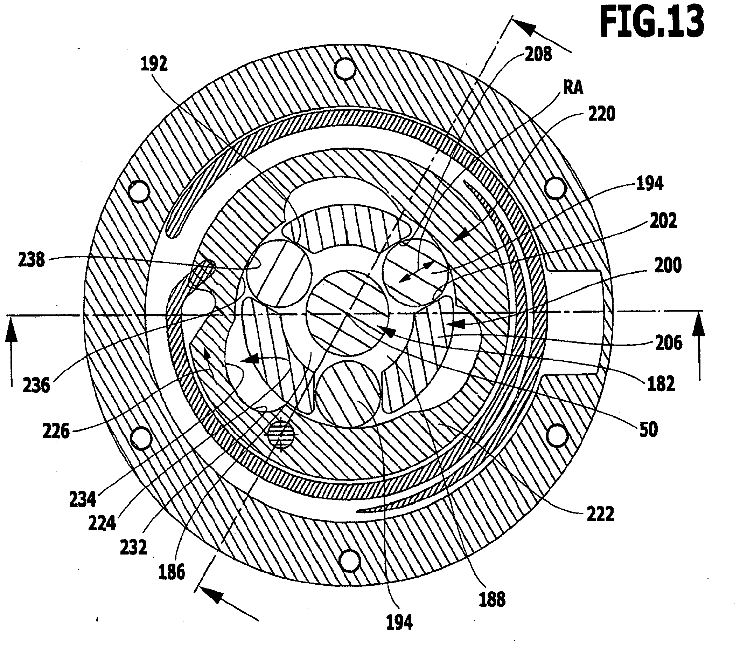

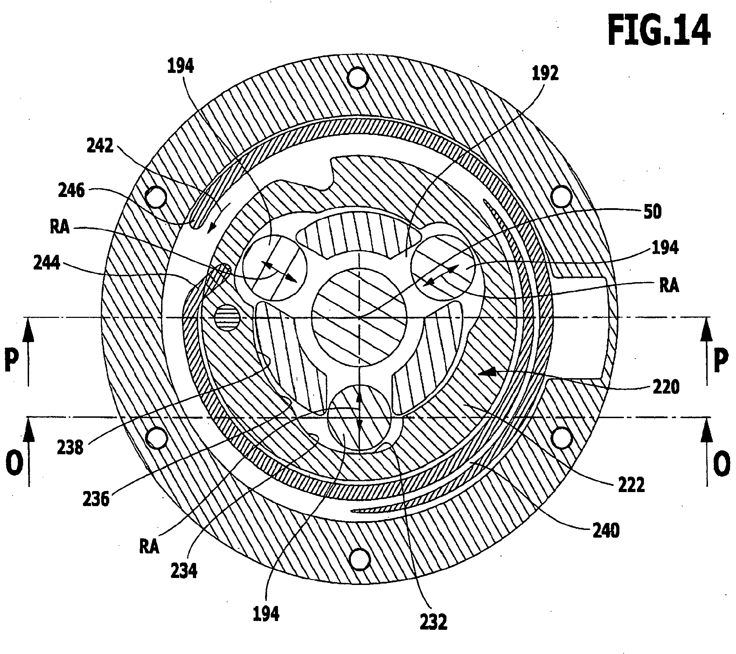

Mit den Verriegelungsaufnahmen 184 wirken, wie sich insbesondere aus den Fig. 13 und 14 ergibt, Verriegelungselemente 194 zusammen, die in einer radialen Richtung RA zur Schwenkachse 50 bewegbar in einem mit der Schwenklagerbasis 60 verbundenen Führungsträger 200, und zwar in Führungen 202 desselben, so geführt sind, dass sie sich zumindest mit einer Komponente in der radialen Richtung RA bewegen können, und außerdem in einer Fläche 204 bewegbar sind, die quer zur Schwenkachse 50 verläuft, und vorzugsweise eine Ebene senkrecht zur Schwenkachse 50 darstellt.

Die Fläche 204 könnte jedoch theoretisch auch als zur Schwenkachse 50 zumindest geringfügig konische verlaufende Fläche ausgebildet sein.

Bei einer Bewegung der Verriegelungselemente 194 in den Führungen 202 führt bereits in der Lösestellung eine Beaufschlagung der Einzugsfläche 189 durch die Verriegelungselemente 194 zu einer parallel zur Schwenkachse 50 gerichteten Kraft F, welche das Schwenkelement 80 von der Schwenkstellung in Richtung der Fixierstellung bewegt und somit die Zahnsegmente 114, 118, 124, 128, 134, 144 der Formschlusselemententräger 112 und 132 in der Arbeitsstellung A oder der Ruhestellung R miteinander in Eingriff bringt, wobei zumindest bei Erreichen der Fixierstellung das Verriegelungselement 194 auf die Verriegelungsfläche 188 wirkt.

Die Führungen 202 sind vorzugsweise als nutähnliche Vertiefungen ausgebildet, die zwischen sich von dem Führungsträger 200 in Richtung des Gehäusekörpers 100 erstreckenden Rippen 206 liegen, wobei die Rippen 206 die jeweils Seitenflächen 208 der Führungen 202 bilden, zwischen denen die Verriegelungselemente 194 in der radialen Richtung RA geführt sind, und außerdem bildet der Führungsträger 200 einen Führüngsgrund 210 auf welchem sich die Verriegelungselemente 194 abstützen und gegen eine Bewegung in Richtung der Schwenkachse 50 am Führungsträger 200, welcher die Form der Fläche 204 definiert, längs welcher die Verriegelungselemente 194 bewegbar sind, um mit deren Verriegelungsaufnahmen 184 in Eingriff oder außer Eingriff zu kommen.

Ferner ist zur Bewegung der Verriegelungselemente 194 in der radialen Richtung RA in den Führungen 202 ein als Ganzes mit 220 bezeichnetes Betätigungselement vorgesehen, welches einen Betätigungsflächenträger 222 aufweist, welcher sämtliche Verriegelungselemente 194 auf ihrer den Verriegelungsaufnahmen 184 gegenüberliegenden radial außenliegenden Seite umschließt und für jedes der Verriegelungselemente 194 eine sich in einer Drehrichtung 226 erstreckende Betätigungsflächenfolge 224 aufweist, die von einem radial außenliegenden Freigabeflächenbereich 232, welcher, wie in Fig. 14 dargestellt, eine Lösestellung des jeweiligen Verriegelungselements 194 zulässt, in welcher dieses nicht in die Verriegelungsaufnahme 184 eingreift, in einen in der Drehrichtung 226 folgenden Verschiebeflächenbereich 234 übergeht, welcher in der Lage ist, das jeweilige Verriegelungselement 194 von der Lösestellung bis in eine Verriegelungsstellung zu überführen.

Im Anschluss an den Verschiebeflächenbereich 234 folgt in der Drehrichtung 226 ein Spannflächenbereich 236, welcher ebenfalls einen sich mit zunehmender Erstreckung in der Drehrichtung 226 verringernden radialen Abstand von der Schwenkachse 50 aufweist und dazu dient, die in der Verriegelungsstellung bereits stehenden Verriegelungselemente 194 mit konstanter oder variierender, beispielsweise zunehmender, Kraft in Richtung der für diese vorgesehenen Verriegelungsaufnahme 184 zu bewegen, bis ein Endflächenbereich 238 der Betätigungsflächenfolge 224 erreicht ist, in welchem das jeweilige Verriegelungselement 194 derart auf die Verriegelungsaufriahme 184 wirkt, dass in der Verriegelungsstellung ein Verspannen des Aufnahmeträgers 182 relativ zum Führungsträger 200 und aufgrund des mit dem Führungsträger 200 einstückig ausgebildeten Formschlusselemententrägers 112 ein Verspannen der Zahnsegmente 114, 118, 124, 128, 134, 144 der Formschlusselemententräger 112 und 132 eintritt.

Wie in Fig. 13 und 14 dargestellt, ist das Betätigungselement 220 im Bereich des Betätigungsflächenträgers 222 ringförmig ausgebildet und in dem Gehäusekörper 100 um die Schwenkachse 50 drehbar gelagert, so dass sich auch die Flächenbereiche 232, 234, 236 und 238 über in der Drehrichtung 226 aufeinanderfolgende Bogensegmente um die Schwenkachse 50 erstrecken und durch Verdrehung des Betätigungselements 220 um die Schwenkachse 50 verschiedene unterschiedliche der Flächenbereiche 232 bis 238 auf die Verriegelungselemente 194 wirken, um diese in der radialen Richtung RA zur Schwenkachse 50 in den Führungen 202 zu bewegen.

Um sicherzustellen, dass im beispielsweise manuell unbetätigten Zustand der erfindungsgemäßen Anhängekupplung das Betätigungselement 220 die Verriegelungselemente 194 stets so beaufschlag, dass diese die Tendenz haben, sich in Richtung der Verriegelungsaufnahmen 184 zu bewegen und die auf das Schwenkelement 80 wirkende Kraft F zu erzeugen, ist das Betätigungselement 220 durch eine Drehfeder 240 in Richtung einer Drehrichtung 242 im Sinne einer Bewegung von der Lösestellung in die Verriegelungsstellung oder Spannstellung beaufschlagt, so dass das Betätigungselement 220 stets das Bestreben hat, die Verriegelungselemente 194 in Richtung der Verriegelungsstellung oder der Spannstellung zu beaufschlagen, so dass die Verriegelungselemente 194 dadurch aufgrund der Wirkung der Drehfeder 240 in der unbetätigten Stellung des Betätigungselements 220 in der Schwenkstellung auf die Einzugsflächen 189 und/oder in der Fixierstellung auf die Verriegelungsflächen 188 wirken und dadurch den Aufnahmeträger 182 mit der Kraft F beaufschlagen, so dass dieser folglich die Tendenz hat, die Formschlusselemente 114, 118, 124, 128, 134, 144 der Formschlusselemententräger 112 und 132 in Eingriff zu bringen und/oder in Eingriff zu halten.

Vorzugsweise ist die Drehfeder 240 so ausgebildet, dass sie den Betätigungsflächenträger 222 des Betätigungselements 220 umschlingt und mit einem Ende 244 an dem Betätigungsflächenträger 222 des Betätigungselements 220 angreift, während sie mit einem anderen Ende 246 an der Schwenklagerbasis 60 angreift und somit mit diesem Ende 246 relativ zu der Schwenklagerbasis 40 fixiert ist.

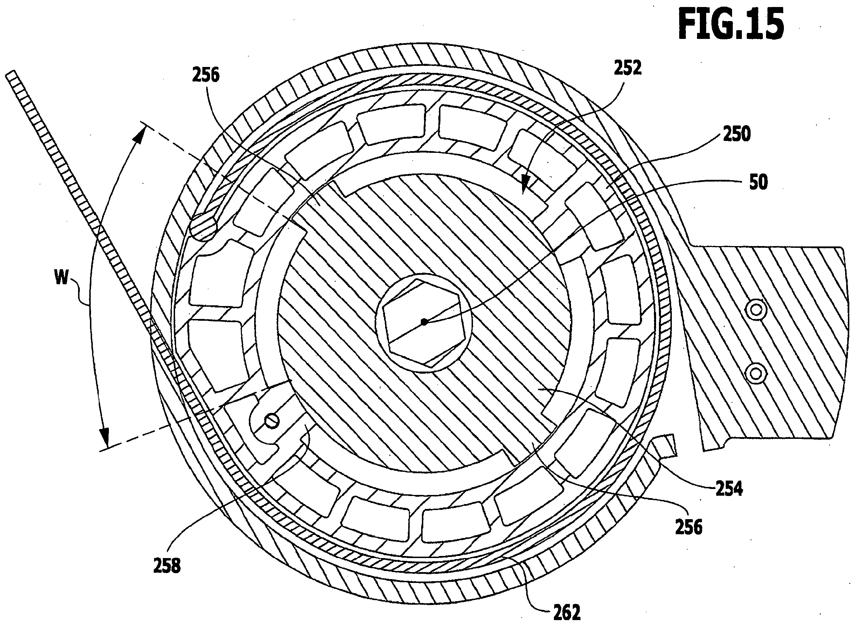

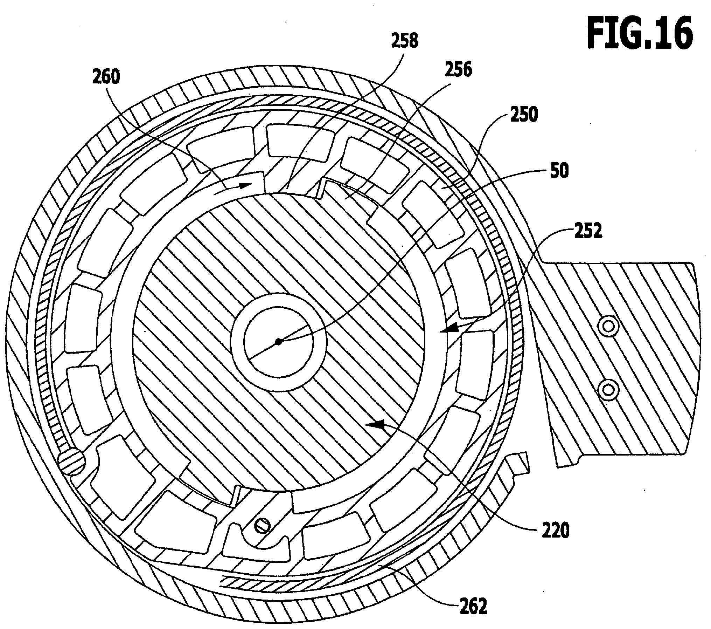

Zum Verdrehen des Betätigungselements 220 gegen die Kraft der Drehfeder 240 ist ein als Ganzes mit 250 bezeichnetes Drehmitnahmeelement vorgesehen, welches, wie in Fig. 15 und 16 dargestellt, sich ebenfalls ringförmig um die Schwenkachse 50 herum erstreckt und über eine Freigangkupplung 252 mit dem Betätigungselement 220 koppelbar ist.

Beispielsweise ist das Betätigungselement 220, wie in Fig. 6 und 7 dargestellt, an einem mit dem Betätigungsflächenträger 222 verbundenen und auf der der Schwenklagerbasis abgewandten Seite des Betätigungsflächenträgers 222 angeordneten Innenteil 254 mit einem Nocken 256 versehen, welcher durch einen in Richtung des Nockens 256 vorspringenden Mitnehmer 258 des Drehmitnahmeelements 250 beaufschlagbar ist, um den Nocken 256 und somit auch das Betätigungselement 220 mit dem Drehmitnahmeelement 250 mitdrehen zu können.

In der Verriegelungsstellung und insbesondere der Spannstellung des Betätigungselements 220 und der nicht betätigten Stellung, das heißt einer Ausgangsstellung des Drehmitnahmeelements 250 liegt zwischen dem Mitnehmer 258 und dem Nocken 256 des Betätigungselements 220 ein Winkelabstand W vor, der dazu führt, dass sich das Betätigungselement 220 aus jeder seiner Stellungen frei in die Verriegelungsstellung, insbesondere die Spannstellung bewegen kann, wobei bei einer Betätigung, das heißt einem Drehen des Drehmitnahmeelements 250 zunächst keine Mitnahme des Betätigungselements 220 erfolgt und erst nach Durchlaufen des Winkelabstands W das Drehmitnahmeelement 250 das Betätigungselement 220 dadurch mitdreht, dass der Mitnehmer 258 auf den Nocken 256 in der Drehrichtung 260 wirkt und somit auch das Betätigungselement 220 mitdreht.

Die Drehbewegung des Drehmitnahmeelements 250 lässt sich beispielsweise, wie in Fig. 15 und 16 dargestellt, durch ein auf das Drehmitnahmeelement 250 wirkendes Zugseil 262 auslösen.

Das Drehmitnahmeelement 250 ist durch eine Drehfeder 264 in seine in Fig. 15 dargestellte Ausgangsstellung bringbar, während ein Ziehen am Zugseil 262 dazu führt, dass sich das Drehmitnahmeelement 250 entgegen der Kraftwirkung der Drehfeder 264 in der Drehrichtung 260 dreht, um dann ab einer Mitnahmestellung mit dem Mitnehmer 258 den Nocken 256 mitzunehmen und somit das Betätigungselement 220 mitzudrehen.

Die Freigangkupplung 252 dient dazu, eine Sicherungseinheit 270 zu entsichern, wobei die Sicherungseinheit 270 dazu dient, ein Verdrehen des Betätigungselements 220 aus der Verriegelungsstellung heraus zu verhindern.

Die Sicherungseinheit 270 umfasst ein Sicherungselement 272, welches parallel zur Schwenkachse 50 verschiebbar in dem Betätigungselement 220, vorzugsweise dem Betätigungsflächenträger 222, gelagert und mit einer Sicherungsaufnahme 274 in der Schwenklagerbasis 60 in Eingriff bringbar ist und dann in Eingriff steht, wenn das Verdrehen des Betätigungselements 220 aus einer der möglichen Verriegelungsstellungen, umfassend die Spannstellungen, in die Lösestellung verhindert werden soll. Hierzu ist das Sicherungselement 272 vorzugsweise durch eine Feder 276 in einer Richtung so beaufschlagt, dass es sich selbsttätig aus der Sicherungsaufnahme löst, wenn die Bewegung des Sicherungselements 272 freigegeben ist.

Die Beaufschlagung des Sicherungselements 272 in Richtung der Sicherungsaufnahme 274 und das Eintauchen in die Sicherungsaufnahme 274 wird bewirkt durch eine Kulissenbahn 278 an dem Drehmitnahmeelement 250, wobei die Kulissenbahn 278 das Sicherungselement 272 mit der Sicherungsaufnahme 274 vorzugsweise kurz vor einer Mitnahme des Betätigungselements durch den auf den Nocken 256 wirkenden Mitnehmer 258 außer Eingriff kommen lässt, um ein Drehen des Betätigungselements 220 zuzulassen.

Sobald jedoch keine Einwirkung mehr auf das Drehmitnahmeelement 250 erfolgt und das Drehmitnahmeelement 250 seine Ausgangsstellung erreicht hat, hat auch das Betätigungselement 220 aufgrund der Wirkung der Drehfeder 240 seine Verriegelungsstellung oder Spannstellung erreicht, so dass das Sicherungselement 272 durch die Kulissenbahn 278 mit der Sicherungsaufnahme 274 in Eingriff gebracht wurde und durch die Kulissenbahn 278 in Eingriff gehalten wird.

Durch die Sicherungseinheit 270 wird somit eine zusätzliche Sicherung des Betätigungselements gegen ein selbsttätiges Lösen erreicht.

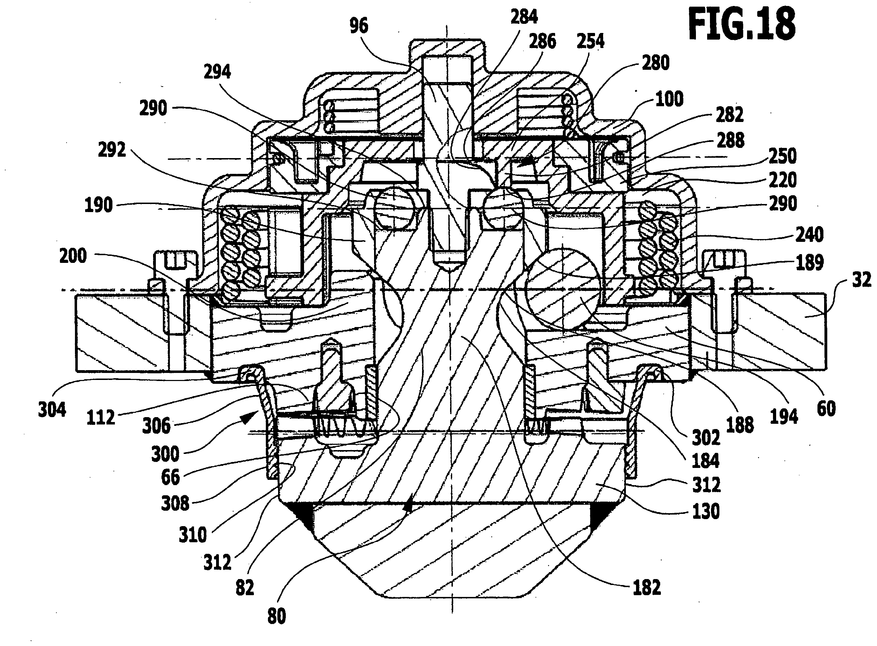

Um bei einem Überführen des Betätigungselements 220 von der Verriegelungsstellung, insbesondere der Spannstellung der Verriegelungsstellung, in die Lösestellung sicherzustellen, dass nicht nur die Verriegelungselemente 194 die Möglichkeit haben, in ihre radial außenliegende Stellung, in welcher sie an den Freigabeflächenbereichen 232 anliegen, überzugehen, sondern auch sicherzustellen, dass sich nach Übergang der Verriegelungselemente 194 in die Lösestellung auch das Schwenkelement 80, insbesondere der Schwenklagerkörper 82, entgegen der Richtung der Kraft F in Richtung der Schwenkachse 50 bewegt, ist, wie in Fig. 7 und 18 dargestellt, eine Ausschiebeeinheit 280 vorgesehen, welche ein Ausschiebeelement 282 aufweist, das an dem Innenteil 254 des Betätigungselements 220 vorgesehen ist und eine Schrägfläche 284 aufweist, die einen Bereich 286 mit maximalem Abstand von der Schwenklagerbasis 60 aufweist und sich erhebt bis zu einem Bereich 288 mit minimalem Abstand von der Schwenklagerbasis 60, so dass beim Drehen des Betätigungselements 220 die Schrägfläche 284 des Ausschiebeelements 282 auf ein Druckaufnahmeelement 290 wirkt, welches beispielsweise als Kugel ausgebildet ist und beispielsweise in einem stufenförmigen Übergangsbereich 292 des Schwenklagerkörpers 82 von dem den Aufnahmeträger 182 bildenden Bereich in den inneren Lagerabschnitt 96 angeordnet ist und in einen mit dem Ringkörper 190 verbundenen Käfigkörper 294 geführt und durch diesen am Schwenklagerkörper 82 gehalten ist

Wenn das Druckaufnahmeelement 290 nun auf der Schrägfläche 284 von dem Bereich 286 entlanggleitet bis zum Bereich 288, so führt dies zu einer zunehmenden Verschiebung des Schwenklagerkörpers 82 und somit des gesamten Schwenkelements 80 von der Fixierstellung, dargestellt in Fig. 6, in die Schwenkstellung, dargestellt in Fig. 7.

Das Ausschiebeelement 282 mit der Schrägfläche 284 ist dabei so angeordnet, dass diese auf das Druckaufnahmeelement 290, welches am Schwenkelement 80 angeordnet ist, dann wirkt, wenn das Betätigungselement 220 bereits soweit in der Drehrichtung 260 verdreht ist, dass dieses die Verriegelungselemente 194 freigibt und in die Lösestellung übergehen lässt. Dann wird das Ausschiebeelement 282 mit der Schrägfläche 284 wirksam und wirkt so auf das Druckaufnahmeelement 290 ein, dass bei einem Weiterdrehen des Betätigungselements 220 das Schwenkelement 80 und auch der Schwenklagerkörper 82 von der Fixierstellung durch eine Bewegung in Richtung der Schwenkachse 50 in die Schwenkstellung übergehen.

Mit der Ausschiebeeinheit 280 wird somit eine zwangsweise Bewegung des Schwenkelements 80 und des Schwenklagerkörpers 82 von der Fixierstellung in die Lösestellung und somit auch ein Lösen der Formschlusselemente der Formschlusselemententräger 112 und 132 zwangsgesteuert erreicht.

Zur Abdichtung zwischen dem Schwenklagerkörper 60 und dem Schwenkelement 80 ist am Schwenklagerkörper 60, beispielsweise radial außerhalb des Formschlusselemententrägers 112 eine um dieses umlaufend angeordnete Dichteinheit 300 vorgesehen, welche mit einem Befestigungssegment 302 in einer Nut 304 in der Schwenklagerbasis 60 fixiert ist und sich mit einem zylindrischen Abschirmsegment 306 ausgehend von dem Befestigungssegment 302 in Richtung des Schwenklagerkörperkopfes 130 erstreckt und mit einem Abschlusssegment 308, welches radial nach innen vorstehende und ringförmig um die Schwenkachse 50 umlaufende Rippen 310 trägt, und mit diesem an einer zur Schwenkachse 50 verlaufenden zylindrischen Umfangsfläche 312 des Schwenklagerkörperkopfes 130 anliegt, wobei beim Verschieben des Schwenkelements 80 zwischen der Fixierstellung und der Schwenkstellung die zylindrische Umfangsfläche 312 relativ zum Abschlusssegment 308 und den Rippen 310 bewegbar ist, dabei ist das Abschlusssegment 308 mit den Rippen 310 jedoch derart angeordnet, dass sowohl in der Schwenkstellung als auch in der Fixierstellung das Abschlusssegment 308 mit den Rippen 310 dicht abschließend an der zylindrischen Umfangsfläche 312 anliegt.

Insbesondere ist dabei das Abschlusssegment 308 mit den Rippen 310 mit Untermaß bezüglich der zylindrischen Umfangsfläche 312 hergestellt, so dass das Abschlusssegment mit den Rippen 310 in radialer Richtung kraftbeaufschlagt an der zylindrischen Umfangsfläche 312 anliegt und für die erforderliche Dichtwirkung sorgt.

Das vorstehend beschriebene erfindungsgemäße Ausführungsbeispiel funktioniert dabei wie folgt.

Ausgehend von dem Fall, dass das Schwenkelement 80 entweder in der Arbeitsstellung A oder in der Ruhestellung R in seiner Fixierstellung steht, und somit in dieser Fixierstellung durch die Verriegelungsvorrichtung 180 fixiert ist, führt eine Betätigung durch Ziehen an dem Zugseil 262 dazu, dass sich das Drehmitnahmeelement 250 in der Drehrichtung 260 dreht. So lange der Mitnehmer 258 der Nocken 256 noch nicht erreicht hat, erfolgt ein Lösen des Sicherungselements 272 der Sicherungseinheit 270 durch das bereits beschriebene Zusammenwirken zwischen dem Drehmitnahmeelement 250 und der Sicherungseinheit 270.

Nach Durchlaufen des Winkelabstands W erreicht der Mitnehmer 258 den Nocken 256 und wirkt auf das Betätigungselement 220 derart ein, dass dieses in der Drehrichtung 260 entgegen der Wirkung der Drehfeder 240 von der Verriegelungsstellung, insbesondere der Spannstellung in der Verriegelungsstellung, in Richtung seiner Lösestellung verdreht wird. Hierbei erhalten die Verriegelungselemente 194 die Möglichkeit, sich von der Verriegelungsstellung, insbesondere der Spannstellung in der Verriegelungsstellung, in Richtung ihrer Lösestellung zu bewegen, wie dies bereits beschrieben wurde.

Nachdem das Betätigungselement 220 so weit in der Drehrichtung 260 gedreht ist, dass die Verriegelungselemente 194 die Möglichkeit haben, vollständig in die Lösestellung überzugehen, wird die Ausschiebeeinheit 280 in der beschriebenen Art und Weise wirksam und verschiebt das Schwenkelement 80 von der Fixierstellung in die Schwenkstellung in der beschriebenen Art und Weise.

Beim Verschieben des Schwenkelements 80 von der Fixierstellung in die Schwenkstellung erfolgt gleichzeitig ein Außereingriffkommen des Bahnfolgers 162 aus der der Anfangsstellung zugeordneten Vertiefung 166, 168 der Fixierblockiereinheit 160.

In der Schwenkstellung greifen die Formschlusselemente 114, 118, 124, 128, 134, 144 nicht mehr ineinander, sondern lassen eine freie Drehbarkeit um die Schwenkachse zu, so dass nach Erreichen der Schwenkstellung das Schwenkelement 80 mit dem Kugelhals 40 von der Ausgangsstellung, beispielsweise der Arbeitsstellung oder der Ruhestellung, in die jeweilige Endstellung, beispielsweise die Ruhestellung bzw. die Arbeitsstellung, um die Schwenkachse 50 verschwenken kann, wobei unmittelbar nach Beginn des Verschwenkens des Schwenkelements 80 um die Schwenkachse 50 der Bahnfolger 162 nicht mehr einer der Vertiefungen 166 und 168 gegenübersteht, sondern der Führungsbahn 164 gegenübersteht.

Wird unmittelbar nachdem der Bahnfolger 162 der Führungsbahn 164 gegenübersteht, auf das Zugseil 262 nicht mehr eingewirkt, so bewegt sich das Drehmitnahmeelement 250 entgegengesetzt zur Drehrichtung 260 in Richtung seiner Ausgangsstellung und folglich ist das Betätigungselement 220 der Kraftwirkung der Drehfeder 240 ausgesetzt, die das Bestreben hat, das Betätigungselement 220 von der Lösestellung in die Verriegelungsstellung und dabei insbesondere in die Spannstellung derselben, zu bewegen. Dies führt zu einer Beaufschlagung der Verriegelungselemente 194, die dadurch auf die Einzugsfläche 189 wirken und dadurch die Kraft F auf den Aufnahmeträger 182 und somit auch das Schwenkelement 80 erzeugen.

Dies führt dazu, dass aufgrund der Kraft F die Führungsbahn 164 mit der Kraft F gegen den Bahnfolger 162 wirkt, der Bahnfolger 162 jedoch verhindert, dass sich das Schwenkelement 80 von der Schwenkstellung in die Fixierstellung bewegt.

Somit ist so lange ein Drehen des Schwenkelements 80 und somit auch des Kugelhalses 40 möglich, bis dieser die jeweilige Endstellung erreicht hat, in welcher der Bahnfolger 162 wieder einer der Vertiefungen 168 bzw. 166 gegenübersteht. Somit kann in dieser Endstellung das Schwenkelement 80 sich von der Schwenkstellung in die Fixierstellung bewegen, wobei dies unter Einwirkung der von den Verriegelungselementen 194 im Zusammenwirken mit der Einzugsfläche 189 erzeugten Kraft F erfolgt, die auch dann noch vorhanden ist, wenn die Verriegelungselemente die Verriegelungsflächen 188 des Aufnahmeträgers 182 beaufschlagen.

Beim Bewegen des Schwenkelements 80 von der Schwenkstellung in die Fixierstellung kommen die Formschlusselemente 114, 118, 124, 128 sowie 134 und 144 miteinander in Eingriff, so dass die Fixiereinheit 110 wiederum für eine drehfeste Festlegung des Schwenkelements 80 und somit des Kugelhalses 40 in dieser Endstellung, das heißt der Ruhestellung bzw. der Arbeitsstellung, sorgt.

Beim Bewegen des Aufnahmeträgers 182 von der Schwenkstellung in die Fixierstellung wandern auch die Verriegelungselemente 194 von ihrer Lösestellung in die Verriegelungsstellung, insbesondere sogar die Spannstellung, unter Einwirkung der Betätigungsflächenfolge 224 in der beschriebenen Art und Weise, so dass dadurch auch das Betätigungselement 220 die Möglichkeit hat, sich in die Verriegelungsstellung, insbesondere in die Spannstellung der Verriegelungsstellung, zu bewegen, so dass wiederum der Nocken 256 im Winkelabstand W von dem Mitnehmer 258 des Drehmitnahmeelements 250 steht, so dass wiederum der Ausgangszustand vorliegt, von welchem ausgehend die Funktion der erfindungsgemäßen Anhängekupplung beschrieben wurde.

Beim Zurückbewegen des Betätigungselements 220 entgegengesetzt zur Drehrichtung 260 erfolgt bei Erreichen der Verriegelungsstellung wiederum ein Wirksamwerden der Sicherungseinheit 270 durch Ineingriffkommen des Sicherungselements 272 mit der Sicherungsaufnahme 274, wobei das Sicherungselement 272 durch das von der Drehfeder 264 beaufschlagte Drehmitnahmeelement 250 entgegen der Kraft der Feder 276 in die Sicherungsaufnahme 274 hinein bewegt wird.

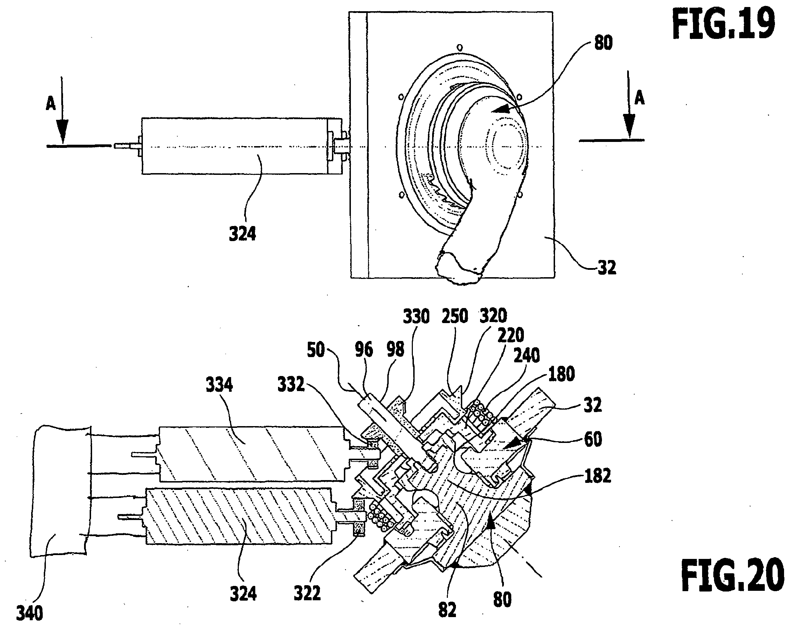

Bei einem zweiten Ausführungsbeispiel der erfindungsgemäßen Anhängekupplung, dargestellt in den Fig. 19 und 20, sind all diejenigen Elemente, die mit denen des voranstehend beschriebenen Ausführungsbeispiels identisch sind, mit denselben Bezugszeichen versehen, so dass vollinhaltlich auf die Ausführungen hierzu Bezug genommen werden kann.

Im Gegensatz zum ersten Ausführungsbeispiel ist das Drehmitnahmeelement 250 nicht durch ein Seilzug antreibbar, sondern mit einer Außenverzahnung 320 versehen, die beispielsweise konisch zur Schwenkachse 50 verläuft.

Mit dieser Außenverzahnung 320 ist ein Antriebsritzel 322 in Eingriff, welcher durch einen Betätigungsmotor 324 antreibbar ist, der vorzugsweise noch ein integriertes Untersetzungsgetriebe aufweist.

Ferner ist zwischen dem inneren Lagerabschnitt 96, der die innere Führungsfläche 98 trägt, und dem Aufnahmeträger 182 der Verriegelungseinheit 180 ein Antriebsrad 330 vorgesehen, welches drehfest mit dem Schwenklagerkörper 82 verbunden ist, wobei das Antriebsrad 330 beispielsweise als Kegelrad ausgebildet ist.

Mit dem Antriebsrad 330 ist ein Antriebsritzel 332 in Eingriff, welches durch einen Schwenkmotor 334 antreibbar ist.

Sowohl der Schwenkmotor 334 als auch der Betätigungsmotor 324 sind durch eine als Ganzes mit 340 bezeichnete Steuerung ansteuerbar, welche den Betätigungsmotor 324 und den Schwenkmotor 334 wie folgt ansteuert.

Wird zum Beispiel ausgehend von der Fixierstellung des Schwenkelements 80 und der Verriegelungsstellung der Verriegelungseinheit 180 ein Überführen des Schwenkelements 80 in die Schwenkstellung angestrebt, so wird von der Steuerung 340 zunächst der Betätigungsmotor 324 angesteuert, so dass dieser das Drehmitnahmeelement 250 von der Ausgangsstellung in die Mitnahmestellung bewegt und dann in der Mitnahmestellung das Betätigungselement 220 so verdreht, dass dieses von seiner Spannstellung oder Verriegelungsstellung in die Lösestellung übergeht und somit die Verriegelung des Aufnahmeträgers 182 seitens der Verriegelungseinheit 180 löst.

Ferner wird das Betätigungselement 220 durch den Betätigungsmotor 324 noch so lange weitergedreht, bis die Ausschiebeeinheit 280 das Schwenkelement 80 von der Fixierstellung in die Schwenkstellung, beispielsweise dargestellt in Fig. 7, verschoben hat.

Nach Erreichen der Schwenkstellung wird der Betätigungsmotor 324 gestoppt.

Gleichzeitig mit dem Erreichen der Schwenkstellung wird der Schwenkmotor 334 aktiviert, welcher ein Schwenken von der Arbeitsstellung in die Ruhestellung oder von der Ruhestellung in Arbeitsstellung veranlasst.

Bereits nach Beginn des Verschwenkens des Schwenkelements 80 kann der Betätigungsmotor 324 in umgekehrter Richtung betrieben werden, so dass sich das Drehmitnahmeelement 250 wiederum angetrieben durch den Betätigungsmotor 324 in die Ausgangsstellung bewegt.

Ohne Einwirkung des Betätigungsmotors 324 auf das Betätigungselement 220 wirkt auf dieses die Drehfeder 240 und folglich beaufschlagt das Betätigungselement 220 die Verriegelungselemente 194 in Richtung der Verriegelungsstellung, so dass diese durch Einwirken auf die Einzugsfläche 189 die Kraft F auf das Schwenkelement 80 erzeugen.

Die Kraft F führt jedoch bis zum Erreichen der jeweiligen Endstellung, das heißt der Arbeitsstellung oder der Ruhestellung, nicht zu einer Bewegung in Richtung der Fixierstellung, da diese durch das Zusammenwirken des Bahnfolgers 162 mit der Führungsbahn 184 verhindert wird.

Sobald das Schwenkelement 80 die Endstellung, das heißt die Ruhestellung bzw. die Arbeitsstellung erreicht hat, erfolgt ein Bewegen des Aufnahmeträgers 182 und somit des Schwenkelements 80 in Richtung der Fixierstellung, da die Verriegelungselemente 194 beaufschlagt durch das Betätigungselement 220, insbesondere die Betätigungsflächenfolge 224, und ausgelöst durch die Drehfeder 240 die Kraft F erzeugen und der Übergang in die Fixierstellung dadurch möglich ist, dass in der jeweiligen Endstellung der Bahnfolger 162 in die Vertiefungen 166 und 168 eintreten kann und somit ein Bewegen des Schwenkelements 80 von der Schwenkstellung in die Fixierstellung zulässt.

Dabei wird seitens der Steuerung 340 jeweils nach Erreichen der Endstellung der Schwenkmotor 334 abgeschaltet.

## Patentansprüche

1. Anhängekupplung umfassend eine fest mit einer Fahrzeugkarosserie (12) verbindbare Halteeinheit (26),
eine an der Halteeinheit (26) vorgesehene Schwenklagereinheit (30) mit einer mit der Halteeinheit (26) fest verbundenen Schwenklagerbasis (60) und mit einem relativ zur Schwenklagerbasis (60) um eine Schwenkachse (50) zwischen einer Arbeitsstellung (A) und einer Ruhestellung (R) verschwenkbaren sowie in Richtung der Schwenkachse (50) verschiebbaren Schwenkelement (80),
einen mit einem Ende (42) an dem Schwenkelement (80) gehaltenen Kugelhals (40), welcher an einem anderen Ende (44) eine Kupplungskugel (46) trägt und welcher durch die Verschwenkbarkeit des Schwenkelements (80) um die Schwenkachse (50) zwischen der Arbeitsstellung (A) und der Ruhestellung (R) verschwenkbar ist, wobei der Kugelhals (40) durch die Verschiebbarkeit des Schwenkelements (80) zwischen einer Fixierstellung und der Schwenkstellung verschiebbar ist, wobei eine Fixiereinheit (110) vorgesehen ist, welche in der Fixierstellung des Schwenkelements (80) das Schwenkelement (80) und somit auch den Kugelhals (40) mit durch die Verschiebung in Richtung der Schwenkachse (50) in Eingriff bringbaren Formschlusselementen (114, 118, 124, 128, 134, 144) relativ zur Schwenklagerbasis (60) drehfest fixiert und in der Schwenkstellung ein Verschwenken zulässt, wobei eine axial gegen eine Verschiebung in Richtung der Schwenkachse (50) wirkende Verriegelungseinheit (180) vorgesehen ist, mit welcher die Fixiereinheit (110) in der Fixierstellung gegen eine Bewegung in Richtung der Schwenkstellung festlegbar ist, wobei die axial wirkende Verriegelungseinheit (180) einen in Richtung der Schwenkachse (50) unverschieblich mit dem Schwenkelement (80) verbundenen und mit dem Schwenkelement (80) in Richtung der Schwenkachse (50) bewegbaren zentralen Aufnahmeträger (182) mit mindestens einer bezogen auf die Schwenkachse (50) radial außen liegenden Verriegelungsaufnahme (184) aufweist, wobei die Verriegelungseinheit (180) mindestens ein in einem Raum (192) um den Aufnahmeträger (182) angeordnetes Verriegelungselement (194) aufweist, welches in eine auf die Verriegelungsaufnahme (184) zum Halten derselben in der Fixierstellung einwirkende Verriegelungsstellung bringbar ist, wobei die Verriegelungseinheit (180) einen mit der Schwenklagerbasis (60) verbundenen Führungsträger (200) mit mindestens einer Führung (202) für das mindestens eine Verriegelungselement (194) aufweist, wobei die Führung (202) dem mindestens einen Verriegelungselement (194) eine Bewegungsrichtung (RA) für eine Bewegung zwischen der Verriegelungsstellung und einer Lösestellung durch dieses vorgibt, wobei die Verriegelungseinheit (180) ein Betätigungselement (220) aufweist, welches von einer dem Aufnahmeträger (182) gegenüberliegenden Seite auf das mindestens eine Verriegelungselement (194) einwirkt, wobei mit dem Betätigungselement (220) eine Bewegung des Verriegelungselements (194) von der Lösestellung in die Verriegelungsstellung erzeugbar oder eine Bewegung des Verriegelungselements (194) von der Verriegelungsstellung in die Lösestellung freigebbar ist,
**dadurch gekennzeichnet , dass** die Verriegelungsaufnahme (184) mit einer Einzugsfläche (189) versehen ist, auf die das Verriegelungselement (194) vor Erreichen der Verriegelungsstellung zum Einziehen des Aufnahmeträgers (182) und somit des Schwenkelements (80) in die Fixierstellung einwirken kann, und dass die Einzugsfläche (189) sich so weit erstreckt, dass das Verriegelungselement (194) auf diese in der Lösestellung einwirken kann, wenn in der Lösestellung eine Beaufschlagung des Verriegelungselements (194) in Richtung der Verriegelungsstellung erfolgt, so dass mit dem Verriegelungselement (194) ein Einziehen des Aufnahmeträgers (182) bereits von der Schwenkstellung ausgehend möglich ist und es auch möglich ist, bereits in der Schwenkstellung eine Einzugskraft auf den Aufnahmeträger (182) wirken zu lassen.

2. Anhängekupplung nach Anspruch 1, **dadurch gekennzeichnet, dass** der zentrale Aufnahmeträger (182) mindestens zwei Verriegelungsaufnahmen (184) aufweist, dass in dem Raum (192) um den zentralen Aufnahmeträger (182) mindestens zwei Verriegelungselemente (194) angeordnet sind und dass der Führungsträger (200) mindestens zwei Führungen (202) für die mindestens zwei Verriegelungselemente (194) aufweist.

3. Anhängekupplung nach Anspruch 1 oder 2, **dadurch gekennzeichnet, dass** das Betätigungselement (220) um die Schwenkachse (50) drehbar ist und mindestens eine Betätigungsflächenfolge (224) aufweist, die einen maximal radial außen liegenden und einen radial maximal innen liegenden Flächenbereich (232, 238) umfasst und dass das mindestens eine Verriegelungselement (194) beim Anliegen an dem radial maximal außen liegenden Flächenbereich (232) in seiner Lösestellung steht und beim Anliegen an dem radial maximal innen liegenden Flächenbereich (238) in seiner Verriegelungsstellung steht.

4. Anhängekupplung nach einem der Ansprüche 1 bis 3, **dadurch gekennzeichnet, dass** das Betätigungselement (220) den Aufnahmeträger (182) und die mindestens zwei Verriegelungselemente (194) radial außen liegend umgibt und dass insbesondere das Betätigungselement (220) einen ringförmigen Betätigungsflächenträger (222) aufweist, an welchem die mindestens eine Betätigungsflächenfolge (224) angeordnet ist.

5. Anhängekupplung nach einem der voranstehenden Ansprüche, **dadurch gekennzeichnet, dass** das Betätigungselement (220) durch einen Federkraftspeicher (240) ständig in Richtung seiner Verriegelungsstellung beaufschlagt ist.

6. Anhängekupplung nach einem der voranstehenden Ansprüche, **dadurch gekennzeichnet, dass** das Betätigungselement (220) durch eine Sicherungseinheit (270) in seiner Verriegelungsstellung gegen eine Bewegung In seine Lösestellung festlegbar ist.

7. Anhängekupplung nach einem der voranstehenden Ansprüche, **dadurch gekennzeichnet, dass** das Betätigungselement (220) über ein von einer Ausgangsstellung in eine Mitnahmestellung bewegbares Drehmitnahmeelement (250) betätigbar ist.

8. Anhängekupplung nach einem der voranstehenden Ansprüche, **dadurch gekennzeichnet, dass** die axial wirkende Verriegelungseinheit (180) eine axial wirkende Ausschiebeeinheit (280) aufweist.

9. Anhängekupplung nach Anspruch 8, **dadurch gekennzeichnet, dass** die Ausschiebeeinheit (280) eine in Richtung der Schwenkachse (50) wirkendes Ausschiebeelement (282) aufweist, mit welchem das Schwenkelement (80) von der Fixierstellung in die Schwenkstellung verschiebbar ist.

10. Anhängekupplung nach Anspruch 9, **dadurch gekennzeichnet, dass** das Ausschiebeelement (282) auf ein mit dem Schwenkelement (80) gekoppeltes Druckaufnahmeelement (290) wirkt und dass insbesondere das Ausschiebeelement (282) mit dem Druckaufnahmeelement (290) dann das Schwenkelement (80) von der Fixierstellung in die Schwenkstellung bewegt, wenn das mindestens eine Verriegelungselement (194) seine Lösestellung erreichen kann.

11. Anhängekupplung nach einem der voranstehenden Ansprüche, **dadurch gekennzeichnet, dass** sich das mindestens eine Verriegelungselement (194) in der Verriegelungsstellung an der Führung (202) abstützt.

12. Anhängekupplung nach einem der voranstehenden Ansprüche, **dadurch gekennzeichnet, dass** der Führungsträger (200) und ein feststehender Formschlusselemententräger (112) der Fixiereinheit (110) miteinander verbunden sind und dass insbesondere der Führungsträger (200) und der Formschlusselemententräger (112) ein einstückiges Teil bilden.

13. Anhängekupplung nach Anspruch 12, **dadurch gekennzeichnet, dass** die Führung (202) auf einer den Formschlusselementen (114, 118, 124, 128) des feststehenden Formschlusselemententrägers (112) gegenüberliegenden Seite angeordnet ist.

14. Anhängekupplung nach einem der voranstehenden Ansprüche, **dadurch gekennzeichnet, dass** das Schwenkelement (80) einen zentralen Schwenklagerkörper (82) aufweist, der in einer diesen radial außen umschließenden Schwenklagerkörperaufnahme (66) der Schwenklagerbasis (60) um die Schwenkachse (50) schwenkbar und in Richtung der Schwenkachse (50) zwischen der Schwenkstellung und der Fixierstellung verschiebbar gelagert ist und dass insbesondere der Schwenklagerkörper (82) einen mindestens eine Verriegelungsaufnahme (184) aufweisenden zentralen Aufnahmeträger (182) der axial wirkenden Verriegelungseinheit (180) trägt, welcher mit dem Schwenklagerkörper (82) in Richtung der Schwenkachse (50) unverschieblich verbunden ist.

15. Anhängekupplung nach Anspruch 14, **dadurch gekennzeichnet, dass** in einem Raum (192) um den Aufnahmeträger (182) herum mindestens ein Verriegelungselement (194) der axial wirkenden Verriegelungseinheit (180) angeordnet ist, das in einer Führung (202) eines an der Schwenklagerbasis (60) abgestützten Führungsträgers (200) geführt ist und durch ein auf einer dem Aufnahmeträger (182) abgewandten Seite des Verriegelungselements (194) angeordnetes Betätigungselement (220) mit der mindestens einen Verriegelungsaufnahme (184) in Eingriff oder außer Eingriff bringbar ist.

16. Anhängekupplung nach einem der Ansprüche 14 und 15, **dadurch gekennzeichnet, dass** ein feststehender Formschlusselemententräger (112) der Fixiereinheit (110) radial außenliegend in einem um den Schwenklagerkörper (82) herum verlaufenden Bereich der Schwenklagerbasis (60) angeordnet ist.

## Claims

1. Trailer coupling comprising a mounting unit (26) which is fixedly connectable to a vehicle body (12);
a pivot bearing unit (30), provided on the mounting unit (26), having a pivot bearing base (60) which is fixedly connected to the mounting unit (26), and having a pivot element (80) which is pivotable about a pivot axis (50), relative to the pivot bearing base (60), between a working position (A) and a rest position (R), and is displaceable in the direction of the pivot axis (50);
a ball neck (40) which at one end (42) is mounted on the pivot element (80) and which at the other end (44) carries a coupling ball (46), and which, due to the pivotability of the pivot element (80), is pivotable about the pivot axis (50) between the working position (A) and the rest position (R),
the ball neck (40) being displaceable between a fixed position and the pivot position due to the displaceability of the pivot element (80),
a fixing unit (110) being provided, which, in the fixed position of the pivot element (80), fixes the pivot element (80), and thus also the ball neck (40), relative to the pivot bearing base (60) in a rotationally fixed manner by means of positive-fit elements (114, 118, 124, 128, 134, 144) that can be brought into engagement by the displacement in the direction of the pivot axis (50), and in the pivot position allows pivoting,
a locking unit (180) being provided, which acts axially against a displacement in the direction of the pivot axis (50), by means of which, in the fixed position, the fixing unit (110) is fixable against a movement in the direction of the pivot position,
the axially acting locking unit (180) having a central receptacle carrier (182), which has at least one locking receptacle (184) that is radially outward relative to the pivot axis (50), the central receptacle carrier being connected to the pivot element (80) to be non-displaceable in the direction of the pivot axis (50) and being movable together with the pivot element (80) in the direction of the pivot axis (50),
the locking unit (180) having at least one locking element (194), which is situated in a space (192) around the receptacle carrier (182) and may be brought into a locked position that acts on the locking receptacle (184) for holding same in the fixed position,
the locking unit (180) having a guide member (200) which is connected to the pivot bearing base (60) and which has at least one guide (202) for the at least one locking element (194), the guide (202) specifying a direction of movement (RA) for the at least one locking element (194) for a movement between the locked position and a released position, the locking unit (180) having an actuating element (220) which acts on the at least one locking element (194) from a side opposite from the receptacle carrier (182), whereby, by means of the actuating element (220), a movement of the locking element (194) from the released position into the locked position may be produced, or a movement of the locking element (194) from the locked position into the released position may be enabled,
**characterized in that** the locking receptacle (184) is provided with a pull-in surface (189) on which the locking element (194) may act before reaching the locked position for pulling the receptacle carrier (182), and thus the pivot element (20), into the fixed position,
and **in that** the pull-in surface (189) is extended far enough that the locking element (194) is able to act on the pull-in surface in the released position, if, in the released position, the locking element (194) is acted on in the direction of the locked position, so that by means of the locking element (194), it is possible to pull-in the receptacle carrier (182) starting from the pivot position, and it is also possible, in the pivot position, to have a pulling-in force act on the receptacle carrier (182).

2. Trailer coupling according to Claim 1, **characterized in that** the central receptacle carrier (182) has at least two locking receptacles (184), **in that** at least two locking elements (194) are situated in the space (192) around the central receptacle carrier (182), and **in that** the guide member (200) has at least two guides (202) for the at least two locking elements (194) .

3. Trailer coupling according to Claim 1 or 2, **characterized in that** the actuating element (220) is pivotable about the pivot axis (50) and has at least one actuating surface sequence (224) which includes a surface area (232) that is most outward in the radial direction and a surface area (238) that is most inward in the radial direction, and **in that** the at least one locking element (194) is in its released position when it engages against the surface area (232) which is most outward in the radial direction, and is in its locked position when it engages against the surface area (238) which is most inward in the radial direction.

4. Trailer coupling according to any of Claims 1 to 3, **characterized in that** the actuating element (220) radially outwardly encloses the receptacle carrier (182) and the at least two locking elements (194) and **in that** in particular the actuating element (220) has a ring-shaped actuating surface member (222) on which the at least one actuating surface sequence (224) is situated.

5. Trailer coupling according to any of the preceding claims, **characterized in that** the actuating element (220) is continually acted on in the direction of its locked position by an elastic energy store (240).

6. Trailer coupling according to any of the preceding claims, **characterized in that** the actuating element (220) is fixable in its locked position against a movement into its released position by means of a securing unit (270).

7. Trailer coupling according to any of the preceding claims, **characterized in that** the actuating element (220) is actuatable via a rotary drive element (250) which is movable from a starting position into a driving position.

8. Trailer coupling according to any of the preceding claims, **characterized in that** the axially acting locking unit (180) has an axially acting push-out unit (280).

9. Trailer coupling according to Claim 8, **characterized in that** the push-out unit (280) has a push-out element (282), acting in the direction of the pivot axis (50), by means of which the pivot element (80) is displaceable from the fixed position into the pivot position.

10. Trailer coupling according to Claim 9, **characterized in that** the push-out element (282) acts on a pressure absorption element (290) that is coupled to the pivot element (80) and **in that** in particular the push-out element (282) together with the pressure absorption element (290) moves the pivot element (80) from the fixed position into the pivot position if the at least one locking element (194) is able to reach its released position.

11. Trailer coupling according to any of the preceding claims, **characterized in that** the at least one locking element (194) in the locked position is supported on the guide (202).

12. Trailer coupling according to any of the preceding claims, **characterized in that** the guide member (200) and a stationary positive-fit element carrier (112) of the fixing unit (110) are connected to one another and **in that** in particular the guide member (200) and the positive-fit element carrier (112) form an integral part.

13. Trailer coupling according to Claim 12, **characterized in that** the guide (202) is situated on a side opposite from the positive-fit elements (114, 118, 124, 128) of the stationary positive-fit element carrier (112).

14. Trailer coupling according to any of the preceding claims, **characterized in that** the pivot element (80) has a central pivot bearing member (82) which is mounted in a pivot member bearing seat (66) in the pivot bearing base (60) that radially outwardly encloses the central pivot bearing member so as to be pivotable about the pivot axis (50), and which is mounted so as to be displaceable between the pivot position and the fixed position in the direction of the pivot axis (50), and **in that** in particular the pivot bearing member (82) carries a central receptacle carrier (182) of the axially acting locking unit (180) which has at least one locking receptacle (184), the central receptacle carrier being connected to the pivot bearing member (82) so that it is not displaceable in the direction of the pivot axis (50).

15. Trailer coupling according to Claim 14, **characterized in that** at least one locking element (194) of the axially acting locking unit (180) is situated in a space (192) around the receptacle carrier (182), the locking element being guided in a guide (202) of a guide member (200) which is supported on the pivot bearing base (60), and being engageable or disengageable with the at least one locking receptacle (184) by means of an actuating element (220) situated on a side of the locking element (194) facing away from the receptacle carrier (182).

16. Trailer coupling according to either of Claims 14 and 15, **characterized in that** a stationary positive-fit element carrier (112) of the fixing unit (110) is situated radially outwardly in a region of the pivot bearing base (60) which extends around the pivot bearing member (82).

## Revendications

1. Attelage de remorque comprenant une unité de maintien (26) pouvant être fixement raccordée à une carrosserie de véhicule (12),
une unité de palier pivotant (30) prévue contre l'unité de maintien (26), avec une base (60) de palier pivotant fixement raccordée à l'unité de maintien (26) et avec un élément pivotant (80) pouvant pivoter par rapport à la base (60) de palier pivotant autour d'un axe de pivotement (50) entre une position de travail (A) et une position de repos (R) et pouvant coulisser dans la direction de l'axe de pivotement (50),
un col (40) de boule d'attelage, qui est maintenu par une extrémité (42) contre l'élément pivotant (80), qui porte une boule d'attelage (46) à une autre extrémité (44) et qui peut pivoter, du fait de l'aptitude au pivotement de l'élément pivotant (80) autour de l'axe de pivotement (50), entre la position de travail (A) et la position de repos (R), dans lequel le col (40) de boule d'attelage peut coulisser, du fait de l'aptitude au coulissement de l'élément pivotant (80), entre une position de fixation et la position de pivotement, dans lequel une unité de fixation (110) est prévue, laquelle fixe, en position de fixation de l'élément pivotant (80), l'élément pivotant (80) et par conséquent également le col (40) de boule d'attelage avec des éléments à engagement par complémentarité de forme (114, 118, 124, 128, 134, 144) enclenchables par le coulissement dans la direction de l'axe de pivotement (50), solidairement en rotation par rapport à la base (60) de palier pivotant, et permet un pivotement en position de pivotement, dans lequel une unité de verrouillage (180) est prévue, agissant axialement contre un déplacement dans la direction de l'axe de pivotement (50), et au moyen de laquelle l'unité de fixation (110) peut être fixée en position de fixation contre un déplacement vers la position de pivotement, dans lequel l'unité de verrouillage (180) agissant axialement comporte un corps de logement central (182) raccordé à l'élément pivotant (80) de manière non déplaçable dans la direction de l'axe de pivotement (50) et mobile avec l'élément pivotant (80) dans la direction de l'axe de pivotement (50), avec au moins un logement de verrouillage (184) radialement extérieur par rapport à l'axe de pivotement (50), dans lequel l'unité de verrouillage (180) comporte au moins un élément de verrouillage (194), qui est disposé dans un espace (192) autour du corps de logement (182) et qui peut être mis dans une position de verrouillage agissant sur le logement de verrouillage (184) pour le maintien de celui-ci en position de fixation, dans lequel l'unité de verrouillage (180) comporte un support de guidage (200) raccordé à la base (60) de palier pivotant avec au moins un guidage (202) pour ledit au moins un élément de verrouillage (194), le guidage (202) prescrivant audit au moins un élément de verrouillage (194) une direction de déplacement (RA) pour un déplacement entre la position de verrouillage et une position de desserrage par celui-ci, dans lequel l'unité de verrouillage (180) comporte un élément d'actionnement (220) agissant sur ledit au moins un élément de verrouillage (194) depuis un côté en face du corps de logement (182), dans lequel l'élément d'actionnement (220) permet de générer un déplacement de l'élément de verrouillage (194) de la position de desserrage vers la position de verrouillage ou de débloquer un déplacement de l'élément de verrouillage (194) de la position de verrouillage vers la position de desserrage,
**caractérisé en ce que** le logement de verrouillage (184) est doté d'une surface de rentrage (189) sur laquelle l'élément de verrouillage (194) peut agir avant d'atteindre la position de verrouillage pour rentrer le corps de logement (182) et ce faisant l'élément pivotant (80) dans la position de fixation, et **en ce que** la surface de rentrage (189) s'étend suffisamment loin pour que l'élément de verrouillage (194) puisse agir sur celle-ci dans la position de desserrage quand dans la position de desserrage se produit une sollicitation de l'élément de verrouillage (194) dans la direction de la position de verrouillage, de sorte qu'avec l'élément de verrouillage (194) un rentrage du corps de logement (182) soit déjà possible depuis la position de pivotement et qu'il soit également possible déjà dans la position de pivotement de laisser agir une force de rentrage sur le corps de logement (182).

2. Attelage de remorque selon la revendication 1, **caractérisé en ce que** le corps de logement central (182) comporte au moins deux logements de verrouillage (184), **en ce qu'**au moins deux éléments de verrouillage (194) sont disposés dans l'espace (192) autour du corps de logement central (182) et **en ce que** le support de guidage (200) comporte au moins deux guidages (202) pour lesdits au moins deux éléments de verrouillage (194).

3. Attelage de remorque selon la revendication 1 ou 2, **caractérisé en ce que** l'élément d'actionnement (220) est rotatif autour de l'axe de pivotement (50) et comporte au moins une suite de surfaces d'actionnement (224) qui comprend une zone de surface la plus radialement extérieure et une zone de surface la plus radialement intérieure (232, 238), et **en ce que** ledit au moins un élément de verrouillage (194) est dans sa position de desserrage quand il est appliqué contre la zone de surface la plus radialement extérieure (232) et est dans sa position de verrouillage quand il est appliqué contre la zone de surface la plus radialement intérieure (238).

4. Attelage de remorque selon l'une des revendications 1 à 3, **caractérisé en ce que** l'élément d'actionnement (220) entoure de manière radialement extérieure le corps de logement (182) et lesdits au moins deux éléments de verrouillage (194), et **en ce que** l'élément d'actionnement (220) comporte notamment un support de surface d'actionnement (222) de forme annulaire, sur lequel ladite au moins une suite de surfaces d'actionnement (224) est disposée.

5. Attelage de remorque selon l'une des revendications précédentes, **caractérisé en ce que** l'élément d'actionnement (220) est constamment sollicité par un accumulateur d'énergie à ressort (240) dans la direction de sa position de verrouillage.

6. Attelage de remorque selon l'une des revendications précédentes, **caractérisé en ce qu'**un déplacement de l'élément d'actionnement (220) de sa position de verrouillage vers sa position de desserrage peut être empêché par une unité de blocage (270).

7. Attelage de remorque selon l'une des revendications précédentes, **caractérisé en ce que** l'élément d'actionnement (220) est actionnable par l'intermédiaire d'un élément d'entraînement rotatif (250) mobile depuis une position initiale vers une position d'entraînement.

8. Attelage de remorque selon l'une des revendications précédentes, **caractérisé en ce que** l'unité de verrouillage (180) agissant axialement comporte une unité de poussée (280) agissant axialement.

9. Attelage de remorque selon la revendication 8, **caractérisé en ce que** l'unité de poussée (280) comporte un élément de poussée (282) agissant dans la direction de l'axe de pivotement (50), au moyen duquel l'élément pivotant (80) est déplaçable de la position de fixation vers la position de pivotement.

10. Attelage de remorque selon la revendication 9, **caractérisé en ce que** l'élément de poussée (282) agit sur un élément d'absorption de pression (290) accouplé à l'élément pivotant (80) et **en ce que** notamment l'élément de poussée (282) avec l'élément d'absorption de pression (290) déplace ensuite l'élément pivotant (80) de la position de fixation vers la position de pivotement quand ledit au moins un élément de verrouillage (194) peut atteindre sa position de desserrage.

11. Attelage de remorque selon l'une des revendications précédentes, **caractérisé en ce que** ledit au moins un élément de verrouillage (194) s'appuie contre le guidage (202) en position de verrouillage.

12. Attelage de remorque selon l'une des revendications précédentes, **caractérisé en ce que** le support de guidage (200) et un support fixe (112) d'élément à engagement par complémentarité de forme de l'unité de fixation (110) sont raccordés l'un à l'autre et **en ce que** notamment le support de guidage (200) et le support (112) d'élément à engagement par complémentarité de forme forment une pièce d'un seul tenant.

13. Attelage de remorque selon la revendication 12, **caractérisé en ce que** le guidage (202) est disposé sur un côté en face des éléments à engagement par complémentarité de forme (114, 118, 124, 128) du support fixe (112) d'élément à engagement par complémentarité de forme.

14. Attelage de remorque selon l'une des revendications précédentes, **caractérisé en ce que** l'élément pivotant (80) comporte un corps (82) de palier pivotant central, lequel est monté de manière pivotante autour de l'axe de pivotement (50) dans un logement (66) de corps de palier pivotant, entourant de manière radialement extérieure celui-ci, de la base (60) de palier pivotant, et de manière coulissante dans la direction de l'axe de pivotement (50) entre la position de pivotement et la position de fixation, et **en ce que** notamment le corps (82) de palier pivotant supporte un corps de logement central (182) de l'unité de verrouillage (180) agissant axialement, lequel présente au moins un logement de verrouillage (184) et est raccordé au corps (82) de palier pivotant de manière non déplaçable dans la direction de l'axe de pivotement (50).

15. Attelage de remorque selon la revendication 14, **caractérisé en ce que** dans un espace (192) tout autour du corps de logement (182) est disposé au moins un élément de verrouillage (194) de l'unité de verrouillage (180) agissant axialement, lequel est guidé dans un guidage (202) d'un support de guidage (200) s'appuyant contre la base (60) de palier pivotant et peut être enclenché avec ledit au moins un logement de verrouillage (184) ou désenclenché de celui-ci par un élément d'actionnement (220) disposé sur un côté de l'élément de verrouillage (194) éloigné du corps de logement central (182).

16. Attelage de remorque selon la revendication 14 ou la revendication 15, **caractérisé en ce qu'**un support fixe (112) d'élément à engagement par complémentarité de forme de l'unité de fixation (110) est disposé de manière radialement extérieure dans une zone de la base (60) de palier pivotant qui s'étend tout autour du corps (82) de palier pivotant.
